(19) **Europäisches Patentamt / European Patent Office / Office européen des brevets**

(11) **EP 1 785 732 B1**

(12) # EUROPÄISCHE PATENTSCHRIFT

(45) Veröffentlichungstag und Bekanntmachung des Hinweises auf die Patenterteilung:
**15.04.2009 Patentblatt 2009/16**

(51) Int Cl.:
*G01P 3/483* (2006.01)  *G01D 5/241* (2006.01)
*G01P 13/04* (2006.01)

(21) Anmeldenummer: **06019838.9**

(22) Anmeldetag: **22.09.2006**

(54) **Anordnung zum Detektieren einer Rotation eines Drehelements**

Device for detecting rotation of a rotatable element

Dispositif pour la détection de la rotation d'un élément rotatif

(84) Benannte Vertragsstaaten:
**AT CH DE FR LI**

(30) Priorität: **11.11.2005 DE 102005054342**

(43) Veröffentlichungstag der Anmeldung:
**16.05.2007 Patentblatt 2007/20**

(73) Patentinhaber: **Prof. Dr. Horst Ziegler und Partner GbR**
**33100 Paderborn (DE)**

(72) Erfinder:
• **Ziegler, Horst, Prof. Dr.**
**33100 Paderborn (DE)**

• **Leipold, Holger**
**91161 Hilpoltstein (DE)**

(74) Vertreter: **Blaumeier, Jörg**
**LINDNER I BLAUMEIER**
**Patent- und Rechtsanwälte**
**Dr.-Kurt-Schumacher-Strasse 23**
**90402 Nürnberg (DE)**

(56) Entgegenhaltungen:
**EP-A- 0 336 022    EP-A2- 1 033 578**
**DE-A1- 10 027 647    GB-A- 2 146 782**

## Beschreibung

Die Erfindung betrifft eine Anordnung zum Detektieren einer Rotation eines Drehelements.

In der Verbrauchsmesstechnik besteht oft die Aufgabe, bei einem mechanischen Volumenmesser, wie z. B. einem Wasserzähler, die Drehbewegung eines mit verbrauchsproportionaler Drehzahl rotierenden Drehteils, also eines Primärgebers, elektronisch abzutasten. Anschließend kann sie dann elektronisch bewertet, akkumuliert und der akkumulierte Verbrauch über ein optisches oder elektronisches Kommunikationssystem zur Abrechnung, Kontrolle oder Steuerung übertragen werden.

Bei einer elektronischen Abtastung der Drehung kommt eine spezielle Anordnung zum Detektieren einer Rotation eines Drehelements zum Einsatz. Dabei wurden im Stand der Technik verschiedene abzutastende physikalische Parameter vorgeschlagen. Diese Parameter können beispielsweise Farben (schwarz - weiß), magnetische Felder (Nordpol - Südpol), leitfähige und nichtleitfähige Bereiche oder Ähnliches umfassen. Anordnungen, die mit Licht oder magnetischer Abtastung arbeiten, weisen jedoch einige Nachteile auf. So sind beide Nachweismethoden durch externe Störfaktoren (Licht, externe Magneten) beeinflussbar. Eine kompakte, flache Ausführung der Detektionsanordnung mit einem geringen Stromverbrauch ist hierdurch auch nur schwer zu erreichen.

Kapazitive Messverfahren weisen den Vorteil auf, dass sie durch externe Magnetfelder und externes Licht nicht beeinflussbar sind. Eine Anordnung zum Detektieren einer Rotation eines Drehelements auf kapazitiver Basis ist aus der EP 1 033 578 B1 bekannt. Hierbei ist eine elektrisch leitende Teilfläche auf dem Drehelement vorgesehen, die kapazitiv eine Mehrzahl von Anregungselektroden mit einer Empfängerelektrode koppelt, wobei die Elektroden der Teilfläche gegenüberliegen. Die Empfängerelektrode ist dabei zentral angeordnet, die vier Empfängerelektroden sind um jeweils 90° versetzt symmetrisch um die Empfängerelektrode angeordnet. Gemessen wird, indem die Anregungselektroden zeitversetzt mit Spannungspulsen beaufschlagt werden. Dabei handelt es sich um Rechtecksignale, deren Höhe der Spannung einer die Betriebsspannung der Anordnung zur Verfügung stellenden Batterie entspricht. Gemessen wird letztendlich an den Spannungsflanken, die durch die Kopplung entsprechende Empfängersignale an der Empfängerelektrode erzeugen. Die dortige symmetrische Anordnung ermöglicht es zusätzlich, die störende direkte kapazitive Kopplung zwischen Anregungselektroden und Empfängerelektrode zu kompensieren. Dazu wird auf die der momentanen Anregungselektrode gegenüberliegende Anregungselektrode ein invertierter Spannungspuls gegeben.

Diese Anordnung weist insbesondere den Nachteil auf, dass das auf der Empfängerelektrode empfangene Nutzsignal relativ klein ist (etwa 10 mV). Es werden somit Komparatoren mit sehr kleinem Maximaloffset oder aufwändige Abgleichverfahren für den Komparatoroffset benötigt, was die Kosten der Anordnung erhöht.

Der vorliegenden Erfindung liegt daher die Aufgabe zugrunde, eine einfach konzipierte Anordnung zum Detektieren einer Rotation eines Drehelements zu schaffen, die ein deutlich höheres Nutzsignal bei im Wesentlichen gleichem Strombedarf ermöglicht.

Zur Lösung dieser Aufgabe ist bei einer Anordnung der eingangs genannten Art vorgesehen, dass sie umfasst:

- eine auf einer im Wesentlichen planen Fläche des Drehelements vorgesehene elektrisch leitende Teilfläche,
- ein feststehendes Sensorelement mit einer ebenflächigen Anregungselektrode und mit wenigstens zwei ebenflächigen und der Anregungselektrode benachbarten Empfängerelektroden, welche Elektroden der elektrisch leitenden Teilfläche beabstandet gegenüberstehen und die bei Rotation des Drehelements über die elektrisch leitende Teilfläche kapazitiv mit der Anregungselektrode koppelbar sind, und
- Detektionsmittel, umfassend ein Spannungsmittel zum Beaufschlagen der Anregungselektrode mit einem Spannungspuls, dessen Spannung höher als die Spannung einer die Betriebsspannung der Anordnung zur Verfügung stellenden Batterie ist,

sowie Auswertemittel zum Abgreifen von durch kapazitive Kopplung aufgrund des Spannungspulses erzeugten Empfängersignalen von wenigstens zwei Empfängerelektroden, umfassend Vergleichsmittel zur Erzeugung eines basierend auf den Empfängersignalen die Position der Teilfläche bezüglich der Empfängerelektroden anzeigenden Signals.

Der vorliegenden Erfindung liegt der Gedanke zugrunde, das bisher bekannte kapazitive Abtastprinzip letztendlich umzukehren. Es wird nun nicht mehr, wie dies vorher üblich war, ein Rechteckspannungsimpuls auf eine von mehreren Anregungselektroden (bzw. im Fall einer Kompensation auf ein Anregungselektrodenpaar) gegeben und ein resultierendes kapazitiv übergekoppeltes Summensignal an der (einen) Empfängerelektrode abgenommen, sondern es wird nun nur noch ein einziger Hochspannungsimpuls auf eine einzige Anregungselektrode gegeben. An wenigstens zwei einander zugeordneten Empfängerelektroden wird dann ein Empfängersignal abgegriffen und mit Hilfe von Vergleichsmitteln verglichen. Ist eine der Empfängerelektroden mehr von der Teilfläche überdeckt als die andere Empfängerelektrode, mit der verglichen wird, so wird dort ein größeres Signal übertragen, das Vergleichsmittel stellt also einen Unterschied fest. Dadurch, dass ein Hochspannungspuls auf die Anregungselektrode gegeben wird, sind die Nutzsignale, die durch die kapazitive Kopplung entstehen, entsprechend größer, je nach Ausgestaltung des Spannungsmittels etwa um das Zehnfache oder mehr im Vergleich mit der in der EP 1 033 578 B1 angegebenen Konfiguration, wo die Höhe des Spannungspulses im Wesentlichen der Batteriespannung von ca. 3 V entspricht. Dabei ist der grundlegende Aufbau derselbe wie im vorbeschriebenen Stand der Technik, es sind nur wenige zusätzliche Bauelemente erforderlich. Ein solch hoher Spannungspuls sichert auch eine deutlichere Abgrenzung des eigentlichen Signals von externen elektrischen Feldern bzw. Feldschwankungen. Auch ein invertierter Puls auf einer Kompensationselektrode ist nicht mehr nötig, die entsprechende Elektronik kann vorteilhafterweise entfallen.

Zudem weist die erfindungsgemäße Anordnung auch weiterhin die Vorteile der bisherigen Anordnung auf. Da die erforderlichen Elektroden bzw. die Teilfläche in Form sehr dünner metallischer Schichten ausgebildet werden können, ist die Bauhöhe extrem gering. Die Anordnung ist damit kostengünstig herstellbar. Der Anordnung liegt eine einfache Schaltungstechnik zugrunde, die durch die erfindungsgemäßen Verbesserungen noch weiter vereinfacht werden kann, da ein größeres Nutzsignal vorliegt.

Um unabhängig von der Umdrehungsfrequenz des Drehelements eine volle Umdrehung desselben sicher erfassen zu können, hat es sich als vorteilhaft erwiesen, wenn die Frequenz der Spannungspulse, mit welcher die Anregungselektrode über die Detektionsmittel beaufschlagt wird, im Falle einer Detektion ohne Drehrichtungserkennung wenigstens der doppelten, vorzugsweise der vierfachen maximalen Umdrehungsfrequenz des Drehelements entspricht. Im Falle einer Detektion mit Drehrichtungserkennung (wozu dann vier Empfängerelektroden benötigt werden) sollte die Pulsfrequenz wenigstens dem Vierfachen, insbesondere dem Sechsbis Achtfachen, der maximalen Umdrehungsfrequenz entsprechen.

Mit besonderem Vorteil kann vorgesehen sein, dass bei fehlender Kopplung durch die Teilfläche durch einen Spannungspuls der Anregungselektrode ein sowohl im Verlauf als auch in der Amplitude im Wesentlichen gleiches Empfängersignal in jeweils zwei einander zugeordneten Empfängerelektroden erzeugbar ist. Auf diese Art und Weise ist ein unmittelbarer Vergleich der beiden Empfängersignale möglich. Da, falls keine Kopplung durch die Teilfläche vorliegt, die Empfängersignale im Wesentlichen gleich verlaufen, ist der Grad der Überdeckung durch die Teilfläche, also die kapazitive Kopplung, unmittelbar kausal für Unterschiede in den beiden zu vergleichenden Empfängersignalen. Zusätzliche Elektronik zum vorherigen Angleichen zweier Empfängersignale vor dem Vergleich ist somit nicht notwendig. Die Empfängersignale können auf direktem Wege dem Vergleichsmittel zugeführt werden.

In weiterer Ausgestaltung kann die Anregungselektrode senkrecht zur Drehachse des Drehelements angeordnet sein und zur Drehachse punktsymmetrisch sein.

Dabei können sich zwei einander zugeordnete Empfängerelektroden symmetrisch bezüglich der Drehachse gegenüberliegen. In dieser Ausgestaltung wird der Vorteil, dass ohne kapazitive Kopplung die Empfängersignale zweier einander zugeordneter Empfängerelektroden im Wesentlichen gleich sind, bei gleicher geometrischer Form der Empfängerelektroden allein durch die Geometrie der Gesamtanordnung erreicht.

Eine spezielle vorteilhafte Geometrie der Elektroden ist beispielsweise gegeben, wenn die symmetrische Anregungselektrode als runde oder quadratische Zentralelektrode ausgebildet ist und symmetrisch von zwei oder vier die Empfängerelektroden bildenden Ringsegmentelektroden oder winkelförmigen Segmentelektroden umgeben ist. Wichtig ist dabei die symmetrische Anordnung der zwei oder vier Empfängerelektroden bezüglich der Anregungselektrode, durch die sich ergibt, dass ohne kapazitive Kopplung durch die Teilfläche die bei einem Spannungspuls erhaltenen Signale im Wesentlichen gleich verlaufen, somit zum Vergleich direkt dem Vergleichsmittel zuführbar sind. Die Empfängerelektroden selbst können als sich um einen Winkel zwischen 45 bis 90° erstreckende Kreissegmente ausgebildet sein, wobei auch hier unterschiedliche Geometrien denkbar sind, so lange einerseits die Symmetriebedingung gegeben ist, zum anderen eine hinreichende Elektrodenfläche realisiert ist. Die Anregungselektrode sollte derart bemessen sein, dass sie das 0,4 bis 0,8-Fache des Durchmessers der halbkreisförmig ausgebildeten Teilfläche beträgt, so dass eine hinreichende Ankopplung möglich ist. Die Teilfläche selbst sollte dabei derart bemessen sein, dass bei vier Empfängerelektroden zwei benachbarte Empfängerelektroden vollständig überdeckbar sind. Zweckmäßig ist es ferner, wenn an der vorzugsweise halbkreisförmigen Teilfläche eine an der gradlinigen Flächenkante abstehende weitere Teilfläche angeordnet ist, welche die zentrale Anregungselektrode zumindest teilweise überdeckt. Die Größe dieser Teilfläche, die zweckmäßigerweise von ihrer Form her der Form der Anregungselektrode angepasst ist, sollte derart sein, dass ihr Durchmesser dem der Anregungselektrode entspricht. Ist beispielsweise die Anregungselektrode kreisförmig ausgebildet, so stellt die weitere Teilfläche einen Halbkreis dar. Da die eine Hälfte der Anregungselektrode durch die erste, große Teilfläche überdeckt ist, die andere von der zweiten Teilfläche, ist folglich eine vollständige Überdeckung der Anregungselektrode realisiert.

Statt einer zentralen Anregungselektrode kann auch vorgesehen sein, dass die symmetrische Anregungselektrode als runde oder quadratische Außenelektrode ausgebildet ist und zwei oder vier die Empfängerelektroden bildende Ringsegmentelektroden oder winkelförmige Segmentelektroden innerhalb der Anregungselektrode liegen. Diese geometrische Anordnung ist der im letzten Absatz beschriebenen funktional gleichwertig, es gelten die obigen Ausführungen entsprechend. Ist eine an der Teilfläche anschließende weitere Teilfläche vorgesehen, welche die Anregungselektrode zumindest teilweise überdeckt, so hat diese hier selbstverständlich die Form eines Halbringes.

Zweckmäßig ist es, wenn aus den Empfängersignalen von vier Empfängerelektroden, von denen sich jeweils zwei zum Vergleich zugeordnet sind, auch die Drehrichtung bestimmbar ist. Hierbei wird innerhalb regelmäßiger Zeitabstände von ≤ einem Viertel der minimalen Umdrehungszeit ein Spannungspuls auf die Anregungselektrode gegeben und danach jeweils zwei Empfängersignale ausgewertet. Die Richtungserkennung erfolgt dabei bevorzugt nach der Methode der Quadratur-Richtungserkennung.

In weiterer Ausgestaltung der Erfindung kann vorgesehen sein, dass das Spannungsmittel eine Induktivität umfasst. Hierbei kann vorteilhafterweise der Selbstinduktionseffekt zur Erzeugung des Hochspannungspulses benutzt werden.

In konkreter Ausgestaltung kann dabei vorgesehen sein, dass die Induktivität und die aus Anregungselektrode und Empfängerelektroden, gegebenenfalls unter Vermittlung der Teilfläche, gebildeten Kapazitäten einen Schwingkreis bilden, in den über einen Schalter, insbesondere einen Transistor, elektrische Energie einbringbar ist. Der Ablauf zur Erzeugung des Spannungspulses ist dann im Wesentlichen folgender. Zunächst wird durch Schließen des Schalters eine Spannung an die Induktivität angelegt, so dass der Strom durch die Induktivität im Wesentlichen linear mit der Zeit ansteigt. Wird der Schalter nun wieder geöffnet, so bildet die Induktivität zusammen mit den durch die Anregungselektrode und die Empfängerelektroden, gegebenenfalls unter Vermittlung der Teilfläche, gebildeten Kapazitäten einen elektrischen Schwingkreis. Dabei pendelt nun die Energie zwischen der Induktivität und der Kapazität mit der Eigenfrequenz des Schwingkreises hin und her, wobei selbstverständlich eine Dämpfung aufgrund der vorhanden endlichen Widerstände innerhalb der Schaltung auftritt. Nach einer halben Periode ist die Energie vollständig auf die Kapazität übergegangen, in der nach dem Prinzip der Energieerhaltung nun eine gewisse Maximalspannung entsteht. Da die Kapazität der Elektrodenanordnung relativ klein ist, ergeben sich hier im Vergleich zur Betriebsspannung hohe Spannungspulse. Die Höhe des Spannungspulses bestimmt sich letztendlich aus der Zeit, in der der Schalter geschlossen war, dem Verhältnis zwischen der Induktivität und der Kapazität, und der Batteriespannung.

Zweckmäßigerweise ist bei solch einer Ausgestaltung des Spannungsmittels am Schalter eine die Nachschwingung des Schwingkreises ableitende Diode vorgesehen. Über eine solche Rückflussdiode, die im Übrigen in handelsüblichen Transistoren als Schutzdiode schon vorgesehen ist, wird der negative Anteil der im Schwingkreis entstehenden Schwingungen abgeschnitten und über diesen Kurzschluss die elektrische Energie wieder aus dem Schwingkreis entfernt und fast vollständig wieder der Batterie oder besser dem Pufferkondensator zugeführt. Damit ist also - unabhängig von der widerstandsabhängigen Dämpfung - lediglich der erste, hohe Spannungspuls als Anregung vorhanden, so dass Echos späterer Schwingungszustände keinerlei Einfluss auf die eigentliche Messung haben können.

Liegt die Betriebsspannung bei etwa 3 V, so kann die Höhe des Spannungspulses vorteilhafterweise 30 bis 300 V, insbesondere 100 bis 200 V, betragen. Bei diesen Werten ist eine ausreichende Signalstärke auch nach der kapazitiven Kopplung noch gewährleistet.

In einer Ausführungsform der vorliegenden Erfindung kann das Vergleichsmittel einen Differenzialverstärker umfassen. Über diesen wird der Unterschied zwischen zwei Empfängersignalen verstärkt und zur Weiterverarbeitung weitergeleitet.

Eine vorteilhaftere Ausführungsform ist jedoch gegeben, wenn das Vergleichsmittel wenigstens einen Komparator zum Nachweisen des Vorzeichens der Differenz der Empfängersignale umfasst. Ein solcher analogelektrischer Komparator ist als integrierte Schaltung in vielen Ausführungsvarianten preisgünstig am Markt verfügbar. Er vergleicht die beiden Spannungen der Empfängersignale, die an seine beiden Eingänge geleitet werden, miteinander. Das Vorzeichen der Differenz der Empfängersignale wird am Komparator dann als logisches Ausgangssignal, das also zwei verschiedene Werte haben kann, ausgegeben. Da die Nutzsignale - und auch ihre Differenz - gegenüber dem Stand der Technik höher sind, ist der Einsatz eines üblichen Komparators hier unbedenklich. Bei Gleichheit der beiden Signale gibt ein solcher Komparator jedoch ein undefiniertes Signal aus. Um einen solchen undefinierten Ausgangszustand zu vermeiden, kann vorgesehen sein, dass am Komparator eine kleine Vorspannung (ungefähr entsprechend dem Komparator-Offset) angelegt ist. Damit ist sichergestellt, dass der Ausgangszustand des Komparators vor dem Beginn des Pulses stets ein definiertes Signal ist. Eine solche Vorspannung kann beispielsweise über einen hochohmigen Widerstandsteiler von der Versorgungsspannung erzeugt werden. Das Vorliegen eines definierten Komparatorzustands vor dem Spannungspuls ist deswegen relevant, da beobachtet wurde, dass der Komparator auf unterschiedliche Art auf Pulse und Pulsdifferenzen reagiert, abhängig davon, aus welchem Ruhezustand seines Ausgangs er vor dem Spannungspuls startet. Alternativ kann ein solcher definierter Ausgangszustand des Komparators auch dadurch erreicht werden, dass ein Schaltmittel zum Vertauschen der an den Komparator angeschlossenen Empfängerelektroden und ein zuschaltbares Signalinvertierungsmittel aus Ausgang des Komparators vorgesehen sind, wobei bei einem von einem vorgegebenen Sollsignal abweichenden Ausgangssignal des Komparators unmittelbar vor dem Spannungspuls die angeschlossenen Empfängerelektroden vertauschbar und das Ausgangssignal des Komparators invertierbar ist. Das bedeutet Folgendes: Vor jedem Messvorgang, also unmittelbar vor der Erzeugung des Spannungspulses, wird überprüft, ob der Komparator den richtigen Ausgangszustand hat. Ist dem nicht so, so werden die beiden Eingänge des Komparators letztendlich umgepolt, das heißt, die Empfängerelektrode, die vorher am "+"-Eingang angeschlossen war, liegt dann am "-"-Eingang an und umgekehrt, und die Logik des Ausgangssignals, das bei dieser Verschaltung des Komparators ja gerade den entgegengesetzten Wert hat, wird invertiert. Es wird also letztendlich anstelle einer externen Vorspannung der interne Komparatoroffset dazu genutzt, einen definierten Ausgangszustand vor dem Spannungspuls sicherzustellen.

Um fehlerhafte Messsignale beispielsweise durch Einflüsse externer Felder zu vermeiden, kann weiterhin vorgesehen sein, dass ein Schwellwert für die Schaltdifferenzspannung des Komparators vorgesehen ist. Nur wenn die beiden Empfängersignale um einen vorbestimmten Wert unterschiedlich sind, wird also letztendlich ein Signal erzeugt.

In einer besonders vorteilhaften, Strom sparenden Ausführungsform kann vorgesehen sein, dass der Komparator für einen bestimmten Zeitraum vor oder nach dem Beginn eines Spannungspulses anschaltbar ist, wobei dieser Zeitraum die Dauer des Spannungspulses umfasst. Der Komparator ist somit nur während der kurzen (1 bis 100 μs) Abtastphase aktiviert. In den längeren Pausen zwischen den verschiedenen Abtastungen (1 bis 100 ms) kann der Komparator somit stromlos geschaltet werden, so dass Energie gespart wird.

Sind vier Empfängerelektroden vorgesehen, so bieten sich zwei verschiedene Ausführungsformen an. Zum einen können an jeweils zwei einander zugeordneten Empfängerelektroden die Empfängersignale abgreifbar und den Eingängen jeweils eines Komparators zuführbar sein. In dieser Ausgestaltung sind also zwei Komparatoren vorgesehen, zu deren Eingängen jeweils ein Paar von Empfängersignalen geführt wird. Mit besonderem Vorteil können die zwei Komparatoren als ein Doppelkomparator ausgeführt sein. In einer anderen Ausgestaltung mit vier Empfängerelektroden kann vorgesehen sein, dass an jeweils zwei einander zugeordneten Empfängerelektroden die Empfängersignale abgreifbar und den Eingängen des einen Komparators anhand eines Analogmultiplexers für jedes Empfängerelektrodenpaar separat zuführbar sind. Bei dieser Variante werden zwei kurz aufeinander folgende Spannungspulse über die Anregungselektrode erzeugt, wobei jeweils ein Paar von Empfängerelektroden dem Komparator zugeschaltet ist. Der Zeitabstand zwischen den beiden Spannungspulsen sollte dabei nicht zu lang sein, damit sich das Drehelement nicht nennenswert weiterbewegt hat.

Um eine Information über die Drehung bzw. auch die Drehrichtung des Drehelementes zu erhalten, müssen aufeinander folgende Signale ebenso miteinander verglichen werden, um ein entsprechendes elektronisches Schaltsignal zum Erhöhen des Zählers zu erzeugen. Dafür können die Ausgangssignale des Vergleichsmittels beispielsweise in einem Flip-Flop oder in einem Mikroprozessor gespeichert werden.

In weiterer Ausgestaltung kann vorgesehen sein, dass vier Empfängerelektroden vorgesehen sind, von denen sich jeweils zwei gegenüberliegende Empfängerelektroden, die bei einer Messung ein erstes und ein zweites Empfängersignal erzeugen, zugeordnet sind, dass das Vergleichsmittel, durch welches das Vorzeichen der Differenz des ersten Empfängersignals und des zweiten Empfängersignals bestimmbar ist, bei Gleichheit der Empfängersignale einander zugeordneter Empfängerelektroden zur Erzeugung eines vordefinierten Signals ausgebildet ist, dass ein Austauschmittel vorgesehen ist, so dass durch das Vergleichsmittel auch die Differenz des zweiten Empfängersignals und des ersten Empfängersignals bestimmbar ist, und dass das Auswertemittel durch Vergleich der vier von dem Vergleichsmittel erhaltenen Signale zum Feststellen des gegebenenfalls fehlenden Drehelements ausgebildet ist. In dieser speziellen Ausgestaltung ist es möglich, festzustellen, ob das Drehelement bzw. die Teilfläche noch vorhanden sind. Damit kann einer Manipulation der Anordnung durch Entfernen oder Beschädigen des Drehelements durch eine Art elektrische Plombe vorgebeugt werden. Sind nämlich vier Elektroden vorgesehen, so werden für jedes Empfängerelektrodenpaar die Differenzen der Empfängersignale in beide Richtungen vermessen, wobei bei mindestens einem der beiden Elektrodenpaare dann ein unterschiedliches Signal gemessen werden muss. Wird als Vergleichsmittel beispielsweise ein Komparator verwendet, so hat dieser zwei logische Ausgangszustände. Er gibt eine logische "1", wenn das an seinem "+"-Eingang liegende Signal größer als das an seinem "-"-Eingang liegende Signal ist, und im umgekehrten Falle eine "0". Nun ist es wichtig, dass das Vergleichsmittel ein klar definiertes Ausgangssignal bei gleichen Höhen der Empfängersignale ausgibt. Dann ist nämlich sichergestellt, dass bei unterschiedlicher Überdeckung der Empfängerelektroden durch die Teilfläche bei Vertauschen der Eingangssignale (Empfängersignale) ein unterschiedliches Ausgangssignal erzeugt wird. Für eine sinnvolle elektronische Plombe ist es dementsprechend auch wichtig, dass vier Elektroden vorgesehen sind. Selbst wenn dann zwei Elektroden genau gleich überdeckt sind, so gilt dies eben nicht für das andere Empfängerelektrodenpaar. Das bedeutet, dass von den vier Ausgangssignalen, die dann gemessen werden (die beiden Elektrodenpaare in beiden Differenzrichtungen) mindestens eines und maximal drei eine "1" sind. Ist kein Drehelement bzw. keine Teilfläche vorhanden, so entsprechen alle vier Ausgangssignale des Vergleichsmittels dem vordefinierten Ausgangssignal des Vergleichsmittels bei gleichen Empfängersignalen. Dafür ist es natürlich erforderlich, dass ohne Berücksichtigung der Kopplung der Teilfläche dieselben Empfängersignale in einander zugeordneten Empfängerelektroden erzeugt werden.

Neben der Anordnung betrifft die Erfindung ferner ein Volumenmessgerät zum Messen des Volumens eines durch dieses strömenden Mediums, insbesondere einen Wasserzähler, mit einem vom Medium in Rotation versetzbaren Drehteil, insbesondere einem Flügelrad. Dieses Volumenmessgerät zeichnet sich erfindungsgemäß durch eine Anordnung der vorbeschriebenen Art aus, wobei das Drehelement mit dem Drehteil, insbesondere dem Flügelrad, bewegungsgekoppelt ist.

Das Volumenmessgerät kann erfindungsgemäß ein mechanisches Zählwerk besitzen, welches über ein Zählwerkgetriebe mit dem Drehteil, insbesondere dem Flügelrad, bewegungsgekoppelt ist, wobei das Drehelement seinerseits mit dem Zählwerk oder dem Zählwerkgetriebe bewegungsgekoppelt ist, bevorzugt über ein eigenes Untersetzungsgetriebe. Als besonders zweckmäßig hat es sich erwiesen, wenn das Drehelement eine Rolle des als Rollenzählwerk ausgebildeten Zählwerks ist, wobei die elektrisch leitende Teilfläche an einer Seitenfläche der Rolle vorgesehen ist.

Eine alternative Ausführungsform sieht demgegenüber vor, dass das Drehelement ein Zeiger des Zählwerks oder eine eigene Geberscheibe ist, an dessen oder deren Oberfläche die elektrisch leitende Teilfläche vorgesehen ist, und über dem sich eine Zählwerksabdeckung befindet, wobei das Sensorelement und das Detektionselement an der gegenüberliegenden Seite der Zählwerksabdeckung vorgesehen sind. Sensorelement und Detektionsmittel können in einer lösbar anbringbaren Einheit integriert sein. Bei dieser Ausführungsform befindet sich also die elektrische Teilfläche quasi innerhalb des Volumenmessgeräts, das Sensorelement und das Detektionsmittel dagegen außerhalb des Volumenmessgeräts, sie sind auf die in der Regel in Form einer transparenten Kunststoffkappe ausgeführte Zählwerksabdeckung aufgesetzt. Die Abtastung erfolgt durch die Zählwerksabdeckung hindurch. Als Zeiger bietet sich der ein-Liter-Zeiger des z. B. als Wasserzähler ausgebildeten Volumenmessgeräts an. Diese Ausführungsform bietet den beachtlichen Vorteil, generell ein Volumenmessgerät, z. B. in Form eines Wasserzählers, mit einem ein-Liter-Zeiger, auf dem bereits die elektrisch leitende Teilfläche vorgesehen ist, auszubilden, eichtechnisch zuzulassen, zu beglaubigen und zu installieren. Soll dann zu einem späteren Zeitpunkt eine zusätzliche elektronische Funktion, z. B. die Funkübertragung von Zählerständen oder dergleichen, realisiert werden, so kann dies am bereits betriebsfertig eingebauten Volumenmessgerät durch eine rein passive aufzusetzende Einheit, die das Sensorelement und das Detektionsmittel enthält, realisiert werden, wobei die messtechnischen Eigenschaften nicht beeinflusst werden, auch die betriebstechnische Zulassung des Volumenmessgeräts wird hierdurch nicht in Frage gestellt. Die quasi indirekte Abtastung durch die Zählwerksabdeckung hindurch hat ferner noch den Vorteil, dass die Abdeckung als dielektrische Schicht in den Koppelkapazitäten zwischen den sensorseitig vorgesehenen Elektroden und der elektrisch leitenden Teilfläche dient, wodurch die Kapazität noch etwas vergrößert wird und die Sensoranordnung noch besser arbeitet.

Selbstverständlich muss eine solche lösbar anbringbare Einheit, die ein Sensorelement und ein Detektionsmittel umfasst, nicht unbedingt auf der Zählwerksabdeckung vorgesehen sein. Wenn nicht ein Zeiger als Drehelement vorgesehen ist, sondern das Drehelement als getrennte Einheit vorgesehen ist, kann dieses in geeigneter Weise nahe der Gehäusewand vorgesehen sein, die dort aus einem dielektrischen Material besteht. Die lösbar anbringbare Einheit, die das Sensorelement und das Detektionselement umfasst, wird dann an dieser Stelle aufgesetzt. In einer bevorzugten Ausführungsform kann das Volumenmessgerät dabei aus einem Untergehäuse bestehen, welches stufenförmig ausgebildet ist. Das Drehelement, welches mit einem mechanischen Zählwerk bewegungsgekoppelt ist, kann dann in diesem Untergehäuse gehäusewandnah im Stufenbereich angebracht sein. In die Stufe wird dann die lösbar anbringbare Einheit eingesetzt, so dass durch die spezielle geometrische Ausgestaltung das Sensorelement dem Drehelement genau entgegenliegt.

Daneben betrifft die Erfindung ferner ein Volumenmessgerätesystem, umfassend ein Volumenmessgerät zum Messen des Volumens eines durch dieses strömenden Mediums, insbesondere Wasserzähler, mit einem vom Medium in Rotation versetzbaren Drehteil, insbesondere einem Flügelrad, sowie einem mechanischen Zählwerk mit wenigstens einem Drehelement, insbesondere in Form eines Zeigers, der mit dem Drehteil bewegungsgekoppelt ist und an dessen Oberseite eine elektrisch leitende Teilfläche vorgesehen ist, und der über eine Zählwerksabdeckung oder die Gehäusewand nach außen hin gekapselt ist, sowie einer am Volumenmessgerät außenseitig lösbar, gegebenenfalls nachrüstbar anbringbarer Einheit mit einem Sensorelement und einem Detektionsmittel, wobei das Drehelement, insbesondere in Form des Zeigers, das Sensorelement und das Detektionsmittel eine Anordnung nach einem der diesbezüglichen Ansprüche bilden. Dieses System ermöglicht insbesondere die bereits beschriebene Nachrüstbarkeit, da das Volumenmessgerät selbst bereits von Haus aus mit der entsprechend leitenden Teilfläche, die, da es sich um eine einfache Flächenelektrode handelt, äußerst einfach aufgebracht werden kann, versehen werden kann, die zur Abtastung erforderlichen Teile können in einer separaten Einheit integriert sein, die ein eigenes Systemelement bildet und zu einem beliebigen Zeitpunkt am Volumenmessgerät angebracht werden kann. Für den Fall, dass die Einheit lösbar ist und z. B. nachgerüstet wurde, ist sie entsprechend zu verplomben oder alternative Sicherungsmittel vorzusehen.

Schließlich betrifft die Erfindung ein Verfahren zum Detektieren einer Drehung eines Drehelements mit einer auf einer im Wesentlichen planen Fläche desselben vorgesehenen elektrisch leitenden Teilfläche, welche eine ihr beabstandet gegenüber stehende ebenflächige Anregungselektrode mit wenigstens zwei ebenflächigen, der Anregungselektrode benachbarten Empfängerelektroden kapazitiv koppelt, wobei wiederholt:

-    auf die Anregungselektrode ein Spannungspuls gegeben wird, dessen Spannung höher ist als die Spannung einer die Betriebsspannung der Anordnung zur Verfügung stellenden Batterie,

- Empfängersignale wenigstens eines Paares zweier einander zugeordneter Empfängerelektroden abgegriffen werden und in einem Vergleichsmittel verglichen werden,

- aus dem Ergebnis des Vergleichs ein die Position der Teilfläche bezüglich der Empfängerelektroden anzeigendes Signal bestimmt wird und

- aus zeitlich aufeinander folgenden Signalen die Drehung des Drehelements bestimmt wird.

Ein solches Verfahren lässt sich beispielsweise mit einer in den entsprechenden Ansprüchen beschriebenen Anordnung durchführen.

In weiterer Ausgestaltung des Verfahrens können vier Empfängerelektroden, von denen sich jeweils zwei als Paar zugeordnet sind, vorgesehen sein, wobei nach einem Spannungspuls die Empfängersignale beider Empfängerelektrodenpaare verglichen werden und aus zeitlich aufeinander folgenden Signalen zusätzlich die Drehrichtung bestimmt wird. Zur Bestimmung der Drehrichtung kann weiterhin die Methode der Quadratur-Richtungserkennung verwendet werden.

Erfindungsgemäß kann der Spannungspuls durch die Durchführung folgender Teilschritte erzeugt werden:

- Schließen eines Schalters, so dass sich ein Strom durch eine Induktivität aufbaut, die bei geöffnetem Schalter mit den zwischen der Anregungselektrode und den Empfängerelektroden gebildeten Kapazitäten einen Schwingkreis bildet,

- Öffnen des Schalters zur Unterbrechung des Stromes nach einer vorbestimmten Zeitspanne.

Zeitgleich hiermit kann zeitnah mit dem Öffnen des Schalters ein weiterer Schalter geschlossen werden, der ein den Vergleich durchführendes Vergleichsmittel für eine weitere vorbestimmte Zeitdauer mit dem zu seinem Betrieb nötigen Strom versorgt.

Weitere Vorteile und Einzelheiten der Erfindung ergeben sich aus den im Folgenden beschriebenen Ausführungsbeispielen sowie anhand der Zeichnungen. Dabei zeigen:

Fig. 1      eine Prinzipskizze eines ersten Drehelements mit aufgebrachter elektrisch leitender Teilfläche bei einer erfindungsgemäßen Anordnung,

Fig. 2      eine Prinzipskizze eines ersten Sensorelements einer erfindungsgemäßen Anordnung mit verschiedenen Elektroden auf einer Leiterplatte zur Verwendung mit dem Drehelement aus Fig. 1,

Fig. 3      eine Prinzipskizze eines zweiten Sensorelements der erfindungsgemäßen Anordnung mit verschiedenen Elektroden auf einer Leiterplatte zur Verwendung mit dem Drehelement aus Fig. 1,

Fig. 4      eine Prinzipskizze eines zweiten Drehelements mit aufgebrachter elektrisch leitender Teilfläche bei einer erfindungsgemäßen Anordnung,

Fig. 5      eine Skizze der Elektrodengeometrie bei einem dritten Sensorelement einer erfindungsgemäßen Anordnung zur Verwendung mit dem zweiten Drehelement aus Fig. 4,

Fig. 6      eine Prinzipskizze der elektrischen Verschaltung relevanter Komponenten einer erfindungsgemäßen Anordnung,

Fig. 7      das Ersatzschaltbild eines Transistors mit Schutzdiode und Schaltwiderstand,

Fig. 8      Graphen zur Verdeutlichung der Erzeugung des Hochspannungspulses bei einer erfindungsgemäßen Anordnung,

Fig. 9      Graphen der Empfängersignale zweier einander zugeordneter Empfängerelektroden bei einer erfindungsgemäßen Anordnung,

Fig. 10      Graphen zur Verdeutlichung des Vergleichs zweier Empfängersignale bei einer erfindungsgemäßen Anordnung,

Fig. 11      eine Prinzipskizze der elektrischen Verschaltung der Elektrodenanordnung aus Fig. 3 sowie die an Komparatorausgängen abgreifbaren Signale bei unterschiedlichen Stellungen der Teilfläche,

Fig. 12      eine Prinzipskizze der elektrischen Verschaltung der Elektrodenanordnung aus Fig. 3 in einer zweiten Ausführungsform der vorliegenden Erfindung,

Fig. 13      eine alternative Schaltung zum Erzeugen eines definierten Ausgangssignals bei einem Komparator,

Fig. 14      eine Prinzipskizze der elektrischen Verschaltung der Elektrodenanordnung aus Fig. 3 in einer dritten Ausführungsform der vorliegenden Erfindung,

Fig. 15      eine Schnittansicht eines erfindungsgemäßen Volumenmessgeräts in Form eines Wasserzählers,

Fig. 16 eine Aufsicht im Teilschnitt auf den Zähler aus Fig. 13,

Fig. 17 eine Aufsicht auf ein erfindungsgemäßes Volumenmessgerät einer zweiten Ausführungsform, und

Fig. 18 eine Teilschnittansicht des Volumenmessgeräts aus Fig. 15.

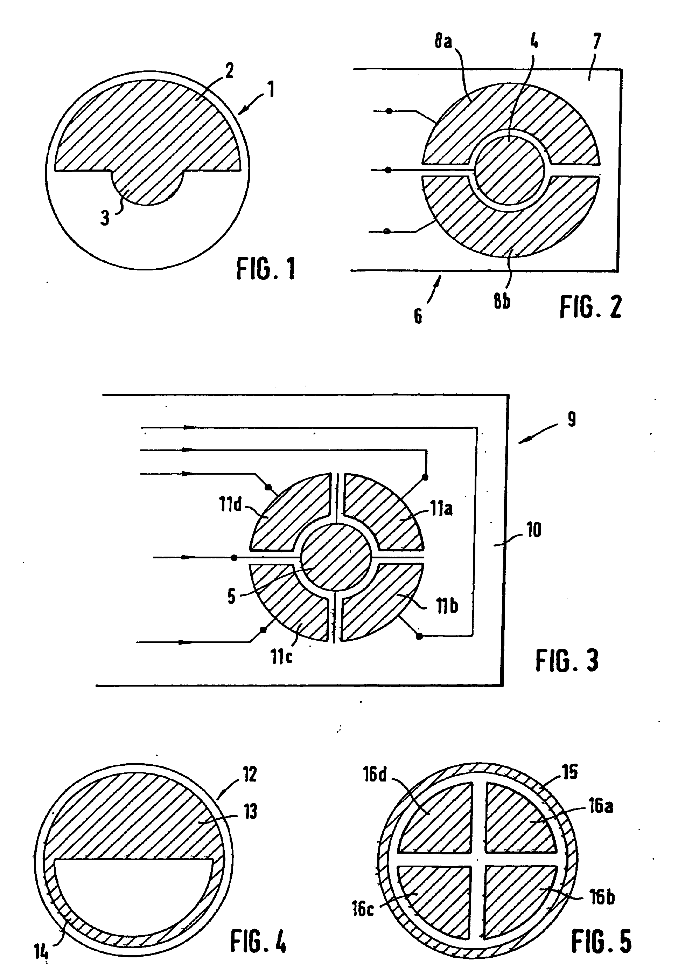

Fig. 1 zeigt eine Aufsicht auf ein erstes Drehelement 1 zur Verwendung mit einer erfindungsgemäßen Anordnung. Es ist scheibenförmig ausgebildet und auf seiner einen Seite mit einer elektrisch leitenden Teilfläche 2 versehen. Diese ist beispielsweise in Form einer Metallisierung aufgebracht. Die Teilfläche 2 des Drehelements 1 erstreckt sich über 180°, also die Hälfte des Drehelements 1. Zentral schließt an die Teilfläche 2 eine weitere Teilfläche 3 an, die halbkreisförmig ausgebildet ist und zur Verbesserung der kapazitiven Kopplung dadurch führt, dass die in Fig. 2 dargestellte zentrale Anregungselektrode 4 beziehungsweise die in Fig. 3 dargestellte zentrale Anregungselektrode 5 immer vollständig einem elektrisch leitenden Bereich gegenüber liegen. Das erste Drehelement 1 wirkt mit einem Sensorelement zusammen.

Ein solches erstes Sensorelement 6, das mit dem ersten Drehelement 1 zusammenwirkt, ist in Fig. 2 im Prinzip dargestellt. Auf einer Leiterplatte 7, die mit einer Rückseitenmetallisierung versehen sein kann, sind neben der zentralen, kreisrunden Anregungselektrode 4 zwei diese umgebende, symmetrische Empfängerelektroden 8a und 8b angeordnet, die jeweils durch im Wesentlichen 180° umfassende Kreisringsegmente gebildet sind. Alle Elektroden sind über Anschlüsse mit einer hier nicht näher gezeigten Elektronik verbunden. Das zweite Sensorelement 6 eignet sich zur Erkennung einer Drehung, wenn keine Drehrichtungserkennung benötigt wird. Die Teilfläche 2 ist so ausgebildet, dass sie, falls sie eine Elektrode 8a oder 8b ganz überdeckt, die andere Elektrode 8b oder 8a überhaupt nicht überdeckt. Dreht sich das Drehelement 1 nun weiter, so liegt jeweils eine Teilüberdeckung der beiden Elektroden vor, bis die andere Elektrode ganz überdeckt ist. Bei der weiter unten beschriebenen Auswertung werden hier lediglich zwei Signale erfasst, aus deren Vergleich festgestellt werden kann, welche Elektrode gerade mehr überdeckt ist. Ist der Überdeckung einer Elektrode beispielsweise das Bit "0" zugeordnet, der Überdeckung der anderen Elektrode das Bit "1", so sind zur Zählung der Umdrehungen einfach die aufeinander folgenden Messungen des Bits "1" zu addieren. Eine Aussage über die Drehgeschwindigkeit kann über die Wechselfrequenz zwischen den verschiedenen Zuständen getroffen werden.

Fig. 3 zeigt ein zweites Sensorelement 9. Auch hier sind auf einer Leiterplatte 10 mehrere Elektroden 5, 11a, 11b, 11c und 11d aufgebracht. Die zentrale Anregungselektrode 5 besitzt dieselbe Form und Ausdehnung wie die zentrale Anregungselektrode 4 des ersten Sensorelements 6. Allerdings sind hier vier Empfängerelektroden 11a, 11b, 11c und 11d vorgesehen, die die zentrale Anregungselektrode 5 in Form von im Wesentlichen 90° überdeckenden Ringsegmenten ausgebildet sind. Alle Elektroden sind auch hier über Anschlüsse mit hier nicht näher dargestellter Elektronik verbunden. Die Teilfläche 2 des ersten Drehelements 1 kann hier jeweils zwei der Elektroden 11a, 11b, 11c oder 11d ganz überdecken.

Die Anregungselektrode muss jedoch nicht wie in den Ausführungsbeispielen nach Fig. 2 und Fig. 3 gezeigt zentral angeordnet sein, sondern sie kann auch die Empfängerelektroden umgeben. In Fig. 4 ist ein zweites scheibenförmiges Drehelement 12 zur Verwendung mit einer erfindungsgemäßen Anordnung dargestellt. Die Teilfläche 13, die wieder halbrund 180° überdeckt, entspricht im Wesentlichen der Teilfläche 2 des ersten Drehelements 1 und ist wiederum beispielsweise durch Metallisierung aufgebracht. An die Teilfläche 13 schließt sich eine weitere Teilfläche 14 an, die die Form eines 180° umfassenden Ringsegments besitzt. Sie sorgt für die Überdeckung der in Fig. 5 dargestellten außen gelegenen Anregungselektrode 15.

Fig. 5 zeigt eine Elektrodengeometrie, wie sie mit dem zweiten Drehelement 12 verwendet werden kann. Die Anregungselektrode ist hier als äußere Anregungselektrode 15 ausgebildet und ringförmig. Innerhalb ihr sind - wiederum symmetrisch - die jeweils im Wesentlichen 90° überdeckenden Empfängerelektroden 16a, 16b, 16c und 16d angeordnet.

Die Elektroden in den Fig. 2, 3 und 5 sind jeweils rund ausgebildet. Es wäre jedoch auch eine quadratische Anregungselektrode denkbar. Ist diese zentral gelegen, wäre sie dann von winkelförmigen Segmentelektroden, die als Empfängerelektroden dienen, umgeben. Die erfindungsgemäße Anordnung ist jedoch nicht auf diese beiden geometrischen Grundformen beschränkt. Grundsätzlich sind auch viele andere Geometrien denkbar, beispielsweise rautenförmige oder sechseckige Geometrien.

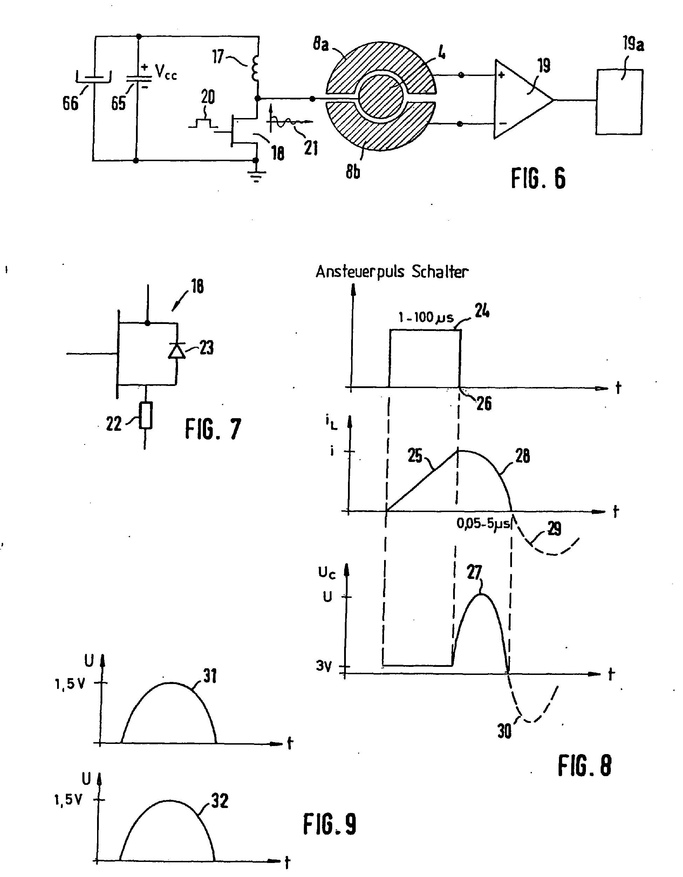

Fig. 6 zeigt die Verschaltung der Elektronik der Detektionsmittel auf der Leiterplatte 7 unter Verwendung des ersten Drehelements 1 aus Fig. 1 und des zweiten Sensorelements 6 aus Fig. 2. Ebenso sind dort der Schaltpuls und der Verlauf des Spannungspulses dargestellt. Eine Batterie 65 mit zugeordnetem Pufferkondensator 66 stellt eine Betriebsspannung $V_{cc}$ zur Verfügung. Bei 17 ist eine Induktivität L angedeutet, bei 18 ein Feldeffekttransistor, der als Schalter fungiert. Die Anregungselektrode ist weiter mit 4 bezeichnet, die Empfängerelektroden mit 8a und 8b. Die Signalausgänge der Empfängerelektroden 8a und 8b sind mit den Eingängen eines Komparators 19 verbunden, der das Vergleichsmittel darstellt. Neben dem Komparator 19 umfassen die Auswertemittel auch eine Auswerteelektronik 19a, z.B. einen Mikroprozessor, einen Flip-Flop und dergleichen. Wenn nun, wie bei 20 angedeutet, ein Rechteckschaltpuls mit einer Länge von 1 - 100 µs auf den Schalter 18 gegeben wird, so ist dieser für die genannte Zeit geschlossen, es baut sich ein Strom in der Induktivität 17 auf. Öffnet der Schalter dann wieder, so entsteht durch die Induktivität 17 im Zusammenhang mit den Kapazitäten zwischen den Elektroden 4, 8a und 8b sowie der Teilfläche 2 ein Schwingkreis, so dass sich ein Spannungssignal ergibt, wie dieses bei 21 angedeutet ist.

Der Komparator 19 ist ein analogelektrischer Komparator. Er vergleicht die Spannung an seinem "Plus"-Eingang mit der Spannung an seinem "Minus"-Eingang miteinander. Ist die Spannung am "Plus"-Eingang höher als die am "Minus"-Eingang, so gibt er an seinem digitalen Ausgang die Betriebsspannung als logisches "1"-Signal aus. Im umgekehrten Fall liegt an seinem Ausgang die Spannung 0 als logisches "0"-Signal an. Sind beide Eingangssignale im Rahmen seiner Genauigkeit (üblicherweise zwischen 1 mV und 30 mV) gleich, so ist sein Ausgangszustand undefiniert, also entweder "0" oder "1".

Fig. 7 zeigt das Ersatzschaltbild des Feldeffekttransistors 18. Jeder derartige Schalter weist einen gewissen Schalterwiderstand 22 auf. Im Feldeffekttransistor 18 ist zusätzlich eine Schutzdiode 23 vorgesehen, die eine negative Spannungsdifferenz zwischen Source und Drain verhindern soll.

Fig. 8 erläutert in Form von drei Graphen das Prinzip der Erzeugung des Hochspannungspulses mit Hilfe des Schalters 18 sowie dem aus der Induktivität 17 und den von den Elektroden 4, 8a und 8b sowie der Teilfläche 2 gebildeten Kapazitäten zusammengesetzten Schwingkreis. Wie im obersten Graphen dargestellt, der auf der Ordinate den Ansteuerpuls für den Schalter zeigt, auf der Abszisse die Zeit t, wird zu Beginn eines Abtastvorgangs durch eine nicht näher gezeigte Analog- oder Digitalschaltung oder über einen Mikroprozessor ein positiver Puls 24 auf das Gate des Feldeffekttransistors gegeben. Allgemein gesagt wird also der Schalter für eine vorgegebene Zeitdauer geschlossen. Im Ausführungsbeispiel kann diese Zeitdauer zwischen 1 und 100 µs betragen. Nachdem nun eine leitende Verbindung der Induktivität 17 mit der Batteriespannung und Masse gegeben ist, steigt der Strom durch die Induktivität 17 im Idealfall, dass die Bauelemente als widerstandslos angenommen werden, linear mit der Zeit an. Dies ist im mittleren Graphen, wo auf der Ordinate der Strom durch die Spule dargestellt ist und auf der Abszisse die Zeit, anhand des linearen Teilstücks 25 zu erkennen. Unter Einbeziehung von Restwiderständen der Induktivität 17 und des Schalters 18 ist der Anstieg etwas geringer. Als Induktivität wird hierbei zwischen 1 und 10 mH gewählt. In einem typischen Ausführungsbeispiel mit $V_{cc}$ = 3 V, Induktivität L = 5 mH und einer Ansteuerpulsdauer von t = 30 µs steigt der Strom damit auf ca. i = 18 mA an. Die in der Induktivität damit gespeicherte magnetische Energie wird durch die Formel

$$E = \tfrac{1}{2} \cdot L \cdot i^2$$

zu 0,8 mJ im vorgenannten Beispiel berechnet. Wird dann der Schalter zum Zeitpunkt 26 geöffnet, so bildet die Induktivität 17 zusammen mit den Kapazitäten C zwischen der Anregungselektrode 4 und den Elektroden 8a, 8b beziehungsweise der leitenden Teilfläche 2 einen elektrischen Schwingkreis mit einer bestimmten Resonanzfrequenz, die üblicherweise im Bereich von 0,1 - 10 MHz liegen sollte. In einem Schwingkreis pendelt die Energie zwischen der Induktivität und der Kapazität im Takt dieser Frequenz hin und her. Da die Bauelemente nicht widerstandsfrei sind, liegt letztendlich eine gedämpfte Schwingung vor, wie auch schon dem Graphen 21 in Fig. 6 zu entnehmen war. Geht man dennoch idealisiert davon aus, dass nach einer halben Periode die Energie vollständig auf die Kapazität übertragen wurde, so kann aus der kapazitiven Energie

$$E = \tfrac{1}{2} \cdot C \cdot u^2$$

die sich ergebende Spitzenspannung an der Kapazität berechnet werden, die dann der Höhe des sich ergebenden Spannungspulses 27 entspricht. Aus der Gleichheit der kapazitiven und der induktiven Energie ergibt sich dann für die Höhe des Spannungspulses 27

$$u = V_{CC} \cdot \frac{i}{\sqrt{L \cdot C}}$$

Da die entstehenden Kapazitäten der Anregungselektrode 4 sehr klein sind (im Bereich von 3 - 60 pF) liegt die auf diese Art und Weise erreichte Spitzenspannung u im Bereich von 30 bis 300 V. Während also der Strom durch die Induktivität 17 in einem Kosinusverlauf, wie bei 28 angedeutet, kleiner wird, ergibt sich an der Anregungselektrode 4 ein Hochspannungspuls 27 in Form einer Sinushalbwelle. Gestrichelt ist bei 29 und 30 die zweite Halbperiode angedeutet, die jedoch durch den von der Schutzdiode 23 erzeugten Kurzschluss abgeschnitten wird, so dass an der Kapazität der Anregungselektrode 4 lediglich der etwas 0,05 bis 5 µs lang dauernde Spannungspuls 27 mit einer Spannung von 30 bis 300 V entsteht.

Dieser sinusförmige Spannungspuls an der Anregungselektrode 4 koppelt nun - auch schon ohne die Kopplung über die leitende Teilfläche 2 - auf die beiden Empfängerelektroden 8a und 8b über, da auch schon ohne die Teilfläche 2 eine gewisse kapazitive Kopplung zwischen den Elektroden besteht. Aufgrund der Mehrzahl der auftretenden Kapazitäten im Schwingkreis bildet sich letztendlich ein kapazitiver Spannungsteiler. Dementsprechend beträgt die Höhe des an den Empfängerelektroden 8a und 8b auftretenden Spannungspulses nur etwa ein Zehntel bis ein Hundertstel der Höhe des Spannungspulses 27 an der Anregungselektrode 4. Typischerweise werden an den Empfängerelektroden etwa 1 bis 2 V gemessen. Die erhaltenen Empfängersignale 31 und 32 ohne Berücksichtigung der Kapazitätenkopplung der Teilfläche 2 sind in den Graphen der Fig. 9 dargestellt. Dort ist jeweils für die Elektroden 8a und 8b auf der Abszisse die Zeit t aufgetragen, auf der Ordinate die Höhe des Spannungspulses. Aufgrund der symmetrischen Anordnung, vgl. Fig. 2, sind die Spannungspulse 31 und 32 sowohl im Verlauf als auch in der Höhe gleich. Das bedeutet aber, dass jedwede Abweichung der Empfängersignale von den Formen 31 und 32 auf die zusätzliche Kopplung durch die Teilfläche 2 zurückzuführen ist.

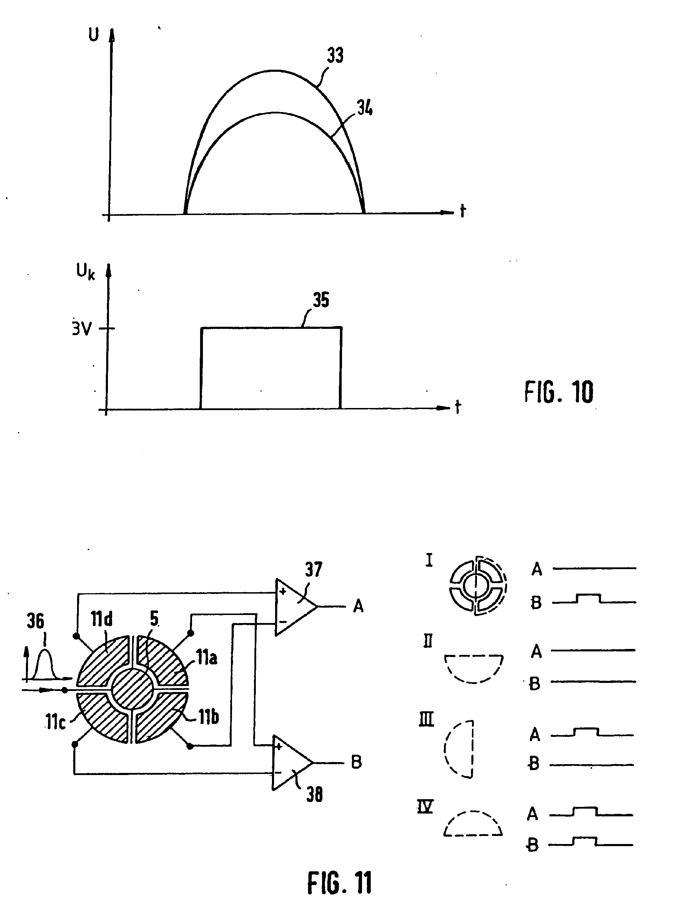

Dies ist anhand der Graphen in Fig. 10 näher erläutert. Im oberen Graphen ist die Höhe der Spannung der Empfängersignale der Empfängerelektroden 8a und 8b gegen die Zeit aufgetragen, im unteren Graphen das entsprechende digitale Ausgangssignal des Komparators 19. Im vorliegenden Fall befindet sich die Teilfläche 2 unter der mit dem "Plus"-Eingang des Komparators 19 verbundenen Empfängerelektrode 8a. Das entsprechende Empfängersignal wird durch die Kurve 33 wiedergegeben. Die gemessene Spannung ist hier aufgrund der zusätzlichen kapazitiven Kopplung der Teilfläche 2 höher als die des entsprechenden Empfängersignals 34 der Empfängerelektrode 8b, die mit dem "Minus"-Eingang des Komparators verbunden ist. Da die am "Plus"-Eingang liegende Spannung größer als die am "Minus"-Eingang liegende Spannung ist, wird während dieser Zeit ein Rechtecksignal 35 vom Komparator erzeugt, das anzeigt, dass sich die Teilfläche 2 unterhalb der Empfängerelektrode 8a befindet. Da eine nennenswerte Empfängersignalstärke, wie schon genannt etwa 1 bis 2 V, vorliegt, ist die Verwendung von handelsüblichen Komparatoren problemlos möglich, vor allem, da bei einer Spitzenspannungsdifferenz von etwa 3 - 30 % je nach Überdeckung und Geometrie der zu messende Unterschied bei 50 - 500 mV liegt.

Die Verschaltung unter Verwendung von vier Empfängerelektroden 11a bis 11d gemäß Fig. 3 ist in Fig. 11 näher dargestellt. Die Mittel zur Spannungserzeugung sind identisch zu den in Fig. 6 dargestellten und daher hier nicht mehr näher diskutiert und dargestellt. Über die Zuleitung zur Anregungselektrode 5 wird, wie bei 36 angedeutet, ein sinusförmiger Spannungspuls auf diese gegeben. Die Elektrode 11d ist mit dem "Plus"-Eingang eines ersten Komparators 37 verbunden, die Elektrode 11a mit dem "Plus"-Eingang eines zweiten Komparators 38. Die Elektroden 11b und 11c sind jeweils mit den "Minus"-Eingängen der Komparatoren 37 und 38 verbunden. Dabei sind sich also jeweils zwei Elektroden, nämlich 11b und 11d sowie 11a und 11c, als ein Paar zugeordnet, dessen Empfängersignale miteinander verglichen werden. Die beiden Komparatoren 37 und 38 sind als ein Doppelkomparator ausgeführt, der das Vergleichsmittel bildet. Die ebenso zum Auswertemittel gehörende Auswerteelektronik ist aus Gründen der Übersichtlichkeit nicht dargestellt. Aufgrund der Symmetrie gilt auch hier, dass ohne die Kopplung durch die Teilfläche 2 gleiche Signale in jeweils zueinander zugeordneten Empfängerelektroden 11a, 11c beziehungsweise 11b, 11d, erhalten werden. Die Empfängersignale können somit unmittelbar den Komparatoren 37 und 38 zugeführt werden.

Die logischen Ausgangssignale A und B der beiden Komparatoren 37 und 38 sind rechts in Fig. 11 für verschiedene Überdeckungen der Empfängerelektroden 11a bis 11d durch die Teilfläche 2, die gestrichelt eingezeichnet ist, dargestellt, Fälle I bis IV. Im Fall I sind die Empfängerelektroden 11a und 11b überdeckt. Am Plus-Eingang des Komparators 38 wird somit ein höheres Signal als am Minus-Eingang gemessen, der Komparator 38 gibt ein Signal aus. Am Komparator 37 ist durch die Überdeckung der Elektrode 11b das am Minus-Eingang gemessene Signal größer als das am Plus-Eingang gemessene Signal der nicht überdeckten Elektrode 11d. Es wird somit kein Signal ausgegeben. Im Fall II sind die beiden jeweils den Minus-Eingängen der Komparatoren 37 und 38 zugeordneten Empfängerelektroden 11c und 11b überdeckt. Beide Komparatoren liefern kein Signal. Im Fall III hat sich das Drehelement wiederum um 90° weitergedreht. Nun sind die Elektroden 11d und 11c überdeckt. 11d ist an den Plus-Eingang des Komparators 37 angeschlossen, so dass dieser ein Signal liefert. Der Komparator 38 liefert kein Signal. Im Fall IV sind letztendlich die beiden den Plus-Eingängen der Komparatoren 37 und 38 zugeordneten Empfängerelektroden 11a und 11d überdeckt, so das beide Komparatoren das Signal ausgeben. Wie klar zu erkennen ist, ist also jeder Überdeckung eine bestimmte Signalkombination zugeordnet, aus der nicht nur die Drehung selber, sondern auch - beispielsweise mittels der Quadratur-Methode - die Drehrichtung bestimmt werden kann. Die beiden im jeweiligen Überdeckungsfall erhaltenen Signale bilden das übliche Zwei-Bit-Quadratursignal zur Richtungserkennung. Dies geschieht durch den Vergleich aufeinander folgender Signale in einem nicht näher gezeigten Mikroprozessor, in dem auch immer das vorangehende Signal gespeichert wird und der einen Teil der Auswerteelektronik bildet.

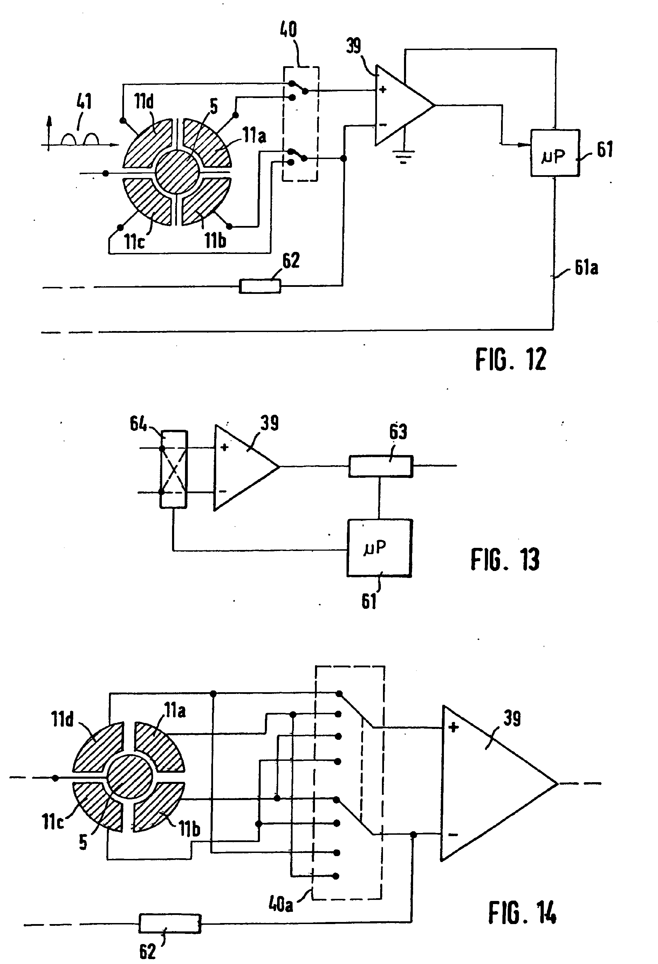

Fig. 12 zeigt eine weitere Möglichkeit der Verschaltung bei einer Messung mit vier Empfängerelektroden 11a bis 11d. Die Elektrodenpaare 11b und 11d sowie 11a und 11c sind nun einem einzigen Analogkomparator 39 als Vergleichsmittel zugeordnet. Über einen Analogmultiplexer 40 ist jeweils ein Paar dem Komparator 39 zuschaltbar. Statt einem einzigen Spannungspuls werden nun, wie bei 41 angedeutet, zwei kurz aufeinander folgende Spannungspulse auf die Anregungselektrode 5 gegeben. Für jeden Spannungspuls wird über ein Steuersignal eines der beiden Empfängerelektrodenpaare im Komparator 39 zugeschaltet. Die am Komparatorausgang entstehenden Signale können dann in einem Mikroprozessor 61 gespeichert werden. Die Signale werden dabei analog Fig. 11 erhalten.

Abschließend bleibt anzumerken, dass bei den hier dargestellten Ausführungsbeispielen der vorliegenden Erfindung jeweils zusätzlich eine Spannungsteilerschaltung vorgesehen sein kann, über die der Komparator immer eine gewisse kleine Vorspannung erhält, die knapp über seiner Empfindlichkeit liegt. Eine solche Vorspannung kann beispielsweise über einen hochohmigen Widerstandsteiler 62 von der Versorgungsspannung $V_{cc}$ abgezweigt werden. Damit ist sichergestellt, dass auch bei gleichen Signalhöhen der Komparator 39 immer ein eindeutiges Signal ausgibt, es liegt also ein definierter Ausgangszustand vor dem Spannungspuls vor, so dass ein Einfluss eines unbestimmten Ausgangssignals ausgeschlossen werden kann. Mit der Messung ergeben sich hierdurch keine Probleme, denn das Signal der Empfängerelektrode, unter der sich die Teilfläche 2 gerade befindet, ist typischerweise um 3 bis 30 % höher als das der gegenüberliegenden Empfängerelektrode. Beträgt die Grundhöhe der Empfängersignale etwa 1,5 V, so beträgt die Differenz zwischen beiden etwa 50 bis 500 mV. Spannungsdifferenzen in dieser Größe kann ein analogelektrischer Komparator aber sicher unterscheiden, wodurch der Komparator 39 in dem Fall, in dem sich die Teilfläche 2 unter der an den Plus-Eingang angeschlossenen Empfängerelektrode befindet, sicher von seinem durch die Vorspannung vorgegebenen "0"-Zustand auf den "1"-Zustand schalten. Ein solcher Spannungsteiler kann bei allen Ausführungsbeispielen vorgesehen werden.

Es kann auch vorgesehen sein, dass ein Schwellenwert für die Schaltdifferenz des Komparators vorgesehen ist, dass er also erst ab einem Spannungsunterschied einer vorbestimmten Größe das Signal schaltet. Dies kann vor allem dann nützlich sein, wenn Manipulationen durch starke elektrische Störfelder oder dergleichen ausgeschlossen werden sollen.

Der in Fig. 12 eingezeichnete Mikroprozessor 61 erfüllt auch die Funktion eines zweiten Schalters, über den der Komparator 39 aus Stromspargründen nur für die Zeit aktiv ist, in der auch gerade eine Messung vorgenommen wird. Der Komparator 39 misst also nur während und gegebenenfalls noch kurz nach dem Spannungspuls auf der Anregungselektrode 5, für eine Zeit von etwa 1 bis 100 µs. In den langen Pausen zwischen den Abtastphasen, die etwa 1 bis 100 ms betragen, ist der Komparator 39 stromlos geschaltet. Auf diese Weise wird viel weniger Strom in der Anordnung verbraucht. Auch ein solcher zweiter Schalter ist bei allen Ausführungen vorsehbar, auch wenn er aus Übersichtlichkeitsgründen nur in Fig. 12 dargestellt ist. Die Leitung 61a deutet die Ansteuerleitung zum Erzeugen des Spannungspulses in dem Spannungsmittel an.

Fig. 13 zeigt eine zu der in Fig. 12 dargestellten Methode unterschiedlicher Art, um ein definiertes Ausgangssignal des Komparators 39 sicherzustellen. Dafür ist dem Komparatorausgang ein Signalinvertierungsmittel 63 nachgeschaltet. Ein Schaltmittel 64 vor den Eingängen des Komparators 39 polt die Eingänge gerade um, das heißt, die an die Eingänge angeschlossenen Empfängerelektroden werden gerade vertauscht. Der Mikroprozessor 61 überprüft nun unmittelbar vor der Messung, also dem Erzeugen des Spannungspulses, ob das Ausgangssignal des Komparators 39 dem gewünschten definierten Ausgangssignal entspricht oder davon abweicht. Weicht es davon ab, werden durch das Schaltmittel 64 die Eingänge umgepolt und das Signalinvertierungsmittel 63 wird aktiv geschaltet. Die Gesamtanordnung erzeugt also wieder das definierte Ausgangssignal und gibt letztendlich das Signal aus, das ohne Umschalten des Schaltmittels 64 erzeugt worden wäre, da das Signalinvertierungsmittel 63 diese Umschaltung ja gerade wieder aufhebt. Als Vorspannung wird hier also nicht über einen Spannungsteiler ein Teil der Batteriespannung abgezweigt, sondern es wird die - allerdings unbekannte - Offsetspannung im Komparator zum Messzeitpunkt ausgenutzt.

Fig. 14 zeigt ein weiteres Ausführungsbeispiel einer erfindungsgemäßen Anordnung. Hier ist zusätzlich eine elektronische Verplombung vorgesehen, das bedeutet, elektrische oder drittpersonenseitig erzeugte elektrische Signale werden als Störfelder erkannt und es ist vor allem erkennbar, ob die Geberscheibe entfernt oder manipuliert wurde. Dazu sind allerdings mehr als zwei aufeinander folgende Abfragen nötig, da beispielsweise die Stellung II der Teilfläche in Fig. 11 dasselbe Signal erzeugt wie eine abwesende Teilfläche. Fig. 14 zeigt die dazu notwendige Verschaltung der Empfängerelektroden 11a - 11d mit dem Komparator 39. Dabei ist ein gegenüber Fig. 12 in der Funktionalität erweiterter Analogmultiplexer 41 vorgesehen, der nacheinander vier verschiedene Kombinationen von Empfängerelektroden abfragt. Die Stellungen I (Abfrage des Empfängerelektrodenpaars 11d - 11b) und II (Abfrage des Elektrodenpaar 11a und 11c) dienen wie in Fig. 12 der Richtungserkennung. Als zusätzliche Abfragemöglichkeiten sind die umgekehrten Konstellationen Stellung III (Abfrage der Empfängerelektroden 11b bund 11d) und Stellung IV (Abfrage der Empfängerelektroden 11c und 11a) vorgesehen. Eine wichtige Rolle spielt bei dieser elektronischen Verplombung der Spannungsteiler 62, der in diesem Fall in der spannungspulsfreien Zeit das definierte Ausgangssignal "0" bewirkt. Unabhängig von der genauen Position der Teilfläche 2 gilt bei deren Vorhandensein nun, dass mindestens einmal und maximal dreimal als Ausgangssignal eine "1" gemessen wird, wenn die vier Kombinationen abgefragt werden. Ist keine kapazitiv koppelnde Teilfläche 2 vorhanden, so ergeben durch die von dem Spannungsteiler 62 erzeugte Vorspannung alle vier Messungen das Ausgangssignal "0". Eine Entfernung oder Manipulation des Drehelements wird sofort bemerkt. Es sei an dieser Stelle angemerkt, dass über geeignete Umschaltmittel eine solche Überprüfung auch im Falle des in Fig. 11 dargestellten Ausführungsbeispiels vorgenommen werden kann. Dazu müssten lediglich zwei Umpolmittel vor den Eingängen der beiden Komparatoren 37 und 38 vorgesehen sein, die jeweils die angeschlossenen Empfängerelektroden 11a - 11d vertauschen, während ein zweiter Spannungspuls nach dem ersten Spannungspuls auf die Anregungselektrode 5 gegeben wird. Es werden dann also auch in diesem Fall zwei Messungen durchgeführt.

Zusammenfassend ergibt sich unter Verwendung einer der oben beschriebenen Anordnungen folgendes erfindungsgemäßes Verfahren. Die Gesamtmesszeit wird in einzelne Abtastvorgänge unterteilt, deren Abstand der durch die maximale Umdrehungsrate vorgegebene Mindestabtasthäufigkeit entspricht. In einem typischen Anwendungsfall wird eine Abtastung mit 256 Hz vorgenommen, also im Zeitabstand von rund 14 ms. Zu Beginn eines Abtastvorgangs wird am Feldeffekttransistor 18 ein Steuerpuls vorbestimmter Zeitdauer an den Gate-Eingang gegeben, der Schalter 18 wird also für eine vorbestimmte Zeit geschlossen. Mit dem Öffnen des Schalters 18 werden der oder die Komparatoren 19, 37, 38 beziehungsweise 39 aktiviert. Im Schwingkreis baut sich derweil der sinusförmige Spannungspuls 27 auf. Eine viertel Periodenzeit nach dem Öffnen des Schalters 18 wird nun der logische Ausgangszustand des oder der Komparatoren 19, 37, 38 beziehungsweise 39 abgefragt und gespeichert. Mit dem Ende des Spannungspulses 27, also nach einer halben Periodenlänge des Schwingkreises, werden auch der oder die Komparatoren 19, 37, 38 beziehungsweise 39 wieder deaktiviert. Das gespeicherte Signal wird nun mit dem letzten gespeicherten Signal verglichen. Sollen letztendlich nur die Anzahl der Umdrehungen bestimmt werden, Ausführungsbeispiel nach Fig. 1 und Fig. 2, so werden die beiden Abtastergebnisse verglichen. Sind sie unterschiedlich, wird ein Halb-Umdrehungspuls gezählt. Wird auch eine Richtungserkennung vorgenommen, vgl. insbesondere Fig. 11, bilden die im jeweiligen Überdeckungsfall erhaltenen Signal zusammen das übliche Zwei-Bit-Quadratursignal zur Richtungserkennung, das entsprechend ausgewertet wird. Dann kann der nächste Abtastvorgang beginnen.

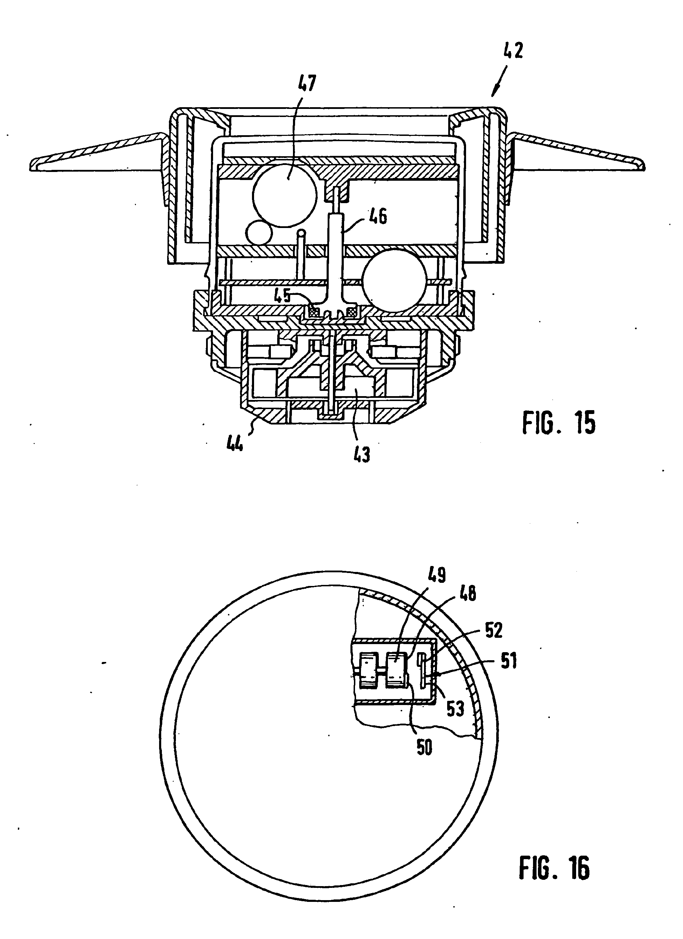

Fig. 15 zeigt schließlich ein erfindungsgemäßes Volumenmessgerät in Form eines Wasserzählers 42. Der Aufbau eines solchen Wasserzählers ist bekannt, auf ihn ist im Detail nicht näher einzugehen. Die für die vorliegende Erfindung relevanten Teile sind das Drehteil in Form eines Flügelrades 43, welches vom durch den unteren Teil 44 des Zählers strömenden Wasser in Rotation versetzt wird. Die Rotation wird über eine Magnetkopplung 45 an eine Drehstange 46 übertragen, die ihrerseits in Bewegungskopplung mit einem mechanischen Rollenzählwerk 47 steht, an welchem, siehe Fig. 16, der gemessene Verbrauch angezeigt wird. Wie Fig. 16 zu entnehmen ist, ist an der ebenen Seitenfläche 48 der dekadischen Rolle 49, die hier das Drehelement darstellt, die Teilfläche 50 aufgebracht. Dem Rollenzählwerk zugeordnet ist das Detektionsmittel 51 mit dem Sensorelement mit der die entsprechenden Elektroden 52 tragenden Leiterplatte 53. Die Spannungserzeugungsmittel und die Auswertemittel sind aus Gründen der Übersichtlichkeit nicht dargestellt. Auf diese Weise kann die Rotation der Rolle 49 erfasst werden und entsprechend hierüber das erfasste Durchflussvolumen akkumuliert werden. Über einen entsprechenden, hier nicht näher dargestellten Ausgang, bei dem es sich um einen elektronischen oder aber einen optischen Ausgang handeln kann, kann dieser Wert dann elektronisch oder optisch von außen mittels eines Lesegeräts abgegriffen werden. Bei der Rolle 49 handelt es sich um die 1-Liter-Rolle.

Dabei muss nicht die dekadische Rolle 49, wie in Fig. 16 gezeigt, selber das Drehelement darstellen. Es kann auch ein getrenntes Drehelement vorgesehen sein, das über eine Welle mit dem mechanischen Rollenzählwerk 47 bewegungsgekoppelt ist. Dieses getrennte Drehelement ist dann nahe der dielektrischen Gehäusewand in einem Gehäusebereich angebracht, dessen Außenform zur Aufnahme einer lösbar anbringbaren Einheit ausgebildet ist, die ein Sensorelement und das Detektionsmittel enthält. Durch Einsetzen der Einheit kommt das Sensorelement in Deckung mit dem Drehelement, so dass durch die Gehäusewand als dielektrische Zwischenlage gemessen werden kann, also eine erfindungsgemäße Anordnung entsteht.

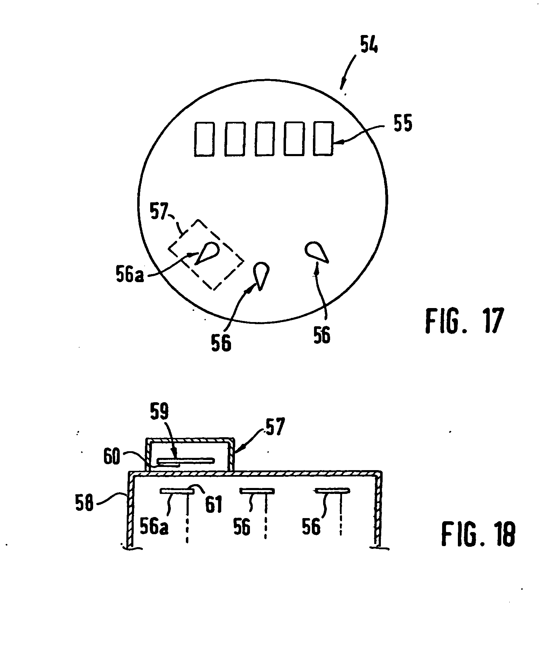

Die Figuren 17 und 18 zeigen eine zweite Ausführungsform eines erfindungsgemäßen Volumenmessgeräts in Form eines Wasserzählers 54. Bei diesem ist ebenfalls ein mechanisches Zählwerk vorgesehen, welches einerseits ein Rollenzählwerk 55 umfasst sowie mehrere Zeiger 56. Wie Fig. 18 zeigt, sind die Zeiger 56 beziehungsweise das gesamte Zählwerk von einer kappenartigen, in der Regel aus transparentem Kunststoff bestehenden Zählwerkabdeckung 58 übergriffen. Dem Zeiger 56a ist eine separate Einheit 57 zugeordnet, in welcher das Sensorelement 59 mit den entsprechenden Elektroden 60 integriert ist, ferner die entsprechenden erforderlichen Detektionsmittel, die hier aus Gründen der Übersichtlichkeit nicht dargestellt sind. In diesem Fall erfolgt die Abtastung der elektrisch leitenden Teilfläche 61, die auf der Oberseite des Zeigers 56a vorgesehen ist, durch die Zählwerksabdeckung 58 hindurch, die als die elektrische Schicht innerhalb der Koppelkapazitäten wirkt und eine Erhöhung derselben bewirkt. Die Einheit 57 selbst kann lösbar und insbesondere nachrüstbar am Volumenmessgerät angebracht werden, das heißt, das Volumenmessgerät wird von Haus aus mit einem Zeiger 56a mit der elektrisch leitenden Teilfläche 61 versehen. Sollen dann zusätzliche elektronische Funktionen wie beispielsweise eine Funkübertragung oder dergleichen am Gerät realisiert werden, wird einfach die Einheit 57 aufgesetzt, die die Volumenerfassung ermöglicht und in der dann noch zusätzliche, für die gewünschte elektronische Funktion erforderliche Komponenten, z.B. in Form einer Funkeinrichtung, integriert sind. Nicht dargestellt sind ferner die entsprechenden sicherheitstechnischen Einrichtungen, die verhindern, dass ein unbefugtes Lösen der Einheit 57 erfolgen kann, z.B. in Form einer Plombierung oder dergleichen.

**Patentansprüche**

1. Anordnung zum Detektieren einer Rotation eines Drehelements (1, 12) umfassend

   - eine auf einer im Wesentlichen planen Fläche des Drehelements (1, 12) vorgesehene elektrisch leitende Teilfläche (2, 13, 50, 61)
   - ein feststehendes Sensorelement (6, 9, 59) mit einer ebenflächigen Anregungselektrode (4, 5, 15) und mit wenigstens zwei ebenflächigen und der Anregungselektrode (4, 5, 15) benachbarten Empfängerelektroden (8a, 8b, 11a-11d, 16a-16d), welche Elektroden der elektrisch leitenden Teilfläche (2, 13, 50, 61) beabstandet gegenüberstehen und die bei Rotation des Drehelements (1, 12) über die elektrisch leitende Teilfläche (2, 13, 50, 61) kapazitiv mit der Anregungselektrode koppelbar sind und
   - Detektionsmittel, umfassend ein Spannungsmittel zum Beaufschlagen der Anregungselektrode (4, 5, 15) mit einem Spannungspuls (27), dessen Spannung (u) höher als die Spannung (V∝) einer die Betriebsspannung der Anordnung zur Verfügung stellenden Batterie ist, sowie Auswertemittel zum Abgreifen von durch kapazitive Kopplung aufgrund des Spannungspulses (27) erzeugten Empfängersignalen (31, 32, 33, 34) von wenigstens zwei Empfängerelektroden (8a, 8b, 11a-11d, 16a-16d), umfassend Vergleichsmittel zur Erzeugung eines basierend auf den Empfängersignalen (31, 32, 33, 34) die Position der Teilfläche (2, 13, 50, 61) bezüglich der Empfängerelektroden (8a, 8b, 11a-11d, 16a-16d) anzeigenden Signals (35), wobei das Vergleichsmittel wenigstens einen Komparator (19, 37, 38, 39) zum Nachweisen des Vorzeichens der Differenz der Empfängersignale (31, 32, 33, 34) umfasst.

2. Anordnung nach Anspruch 1, **dadurch gekennzeichnet, dass** bei fehlender Kopplung durch die Teilfläche (2, 13, 50, 61) durch einen Spannungspuls (27) der Anregungselektrode (4, 5, 15) ein sowohl im Verlauf als auch in der Amplitude im Wesentlichen gleiches Empfängersignal (31, 32) in jeweils zwei einander zugeordneten Empfängerelektroden (8a, 8b; 11a, 11c; 11b, 11d; 16a, 16c; 16b, 16d) erzeugbar ist.

3. Anordnung nach Anspruch 1 oder 2, **dadurch gekennzeichnet, dass** die Anregungselektrode (4, 5, 15) senkrecht zur Drehachse des Drehelements (1, 12) angeordnet ist und zur Drehachse punktsymmetrisch ist sowie sich zwei einander zugeordnete Empfängerelektroden (8a, 8b; 11a, 11c; 11b, 11d; 16a, 16c; 16b, 16d) symmetrisch bezüglich der Drehachse gegenüberliegen.

4. Anordnung nach einem der vorangehenden Ansprüche, **dadurch gekennzeichnet, dass** aus den Empfängersignalen (31, 32, 33, 34) von vier Empfängerelektroden (11a-11d, 16a-16d), von denen sich jeweils zwei (11a, 11c; 11b, 11 d; 16a, 16c; 16b, 16d) zum Vergleich zugeordnet sind, auch die Drehrichtung bestimmbar ist.

5. Anordnung nach einem der vorangehenden Ansprüche, **dadurch gekennzeichnet, dass** die symmetrische Anregungselektrode (4, 5, 15) als runde oder quadratische Zentralelektrode (4, 5) ausgebildet ist und symmetrisch von zwei oder vier die Empfängerelektroden (8a, 8b, 11a-11d, 16a-16d) bildenden Ringsegmentelektroden (8a, 8b, 11a-11d) oder winkelförmigen Segmentelektroden umgeben ist.

6. Anordnung nach einem der Ansprüche 1 bis 3, **dadurch gekennzeichnet, dass** die symmetrische Anregungselektrode (4, 5, 15) als runde oder quadratische Außenelektrode (15) ausgebildet ist und zwei oder vier die Empfängerelektroden (8a, 8b, 11a-11d, 16a-16d) bildende Ringsegmentelektroden (16a-16d) oder winkelförmige Segmentelektroden innerhalb der Anregungselektrode (15) liegen.

7. Anordnung nach einem der vorangehenden Ansprüche, **dadurch gekennzeichnet, dass** eine an der Teilfläche (2, 13, 50, 61) anschließende weitere Teilfläche (3, 14) vorgesehen ist, welche die Anregungselektrode (4, 5, 15) zumindest teilweise überdeckt.

8. Anordnung nach einem der vorangehenden Ansprüche, **dadurch gekennzeichnet, dass** das Spannungsmittel eine Induktivität (17) umfasst.

9. Anordnung nach Anspruch 8, **dadurch gekennzeichnet, dass** die Induktivität (17) und die aus Anregungselektrode (4, 5, 15) und Empfängerelektroden (8a, 8b, 11a-11d, 16a-16d) gebildeten Kapazitäten einen Schwingkreis bilden, in den über einen Schalter, insbesondere einen Transistor (18), elektrische Energie einbringbar ist.

10. Anordnung nach Anspruch 9, **dadurch gekennzeichnet, dass** am Schalter (18) eine die Nachschwingung des Schwingkreises ableitende Diode (23) vorgesehen ist.

11. Anordnung nach einem der vorangehenden Ansprüche, **dadurch gekennzeichnet, dass** die Höhe des Spannungspulses (27) 30 bis 300 V, vorzugsweise 100 bis 200 V, insbesondere 140 bis 160 V, bei einer Betriebsspannung von 0,3 bis 6 V beträgt.

12. Anordnung nach einem der vorangehenden Ansprüche, **dadurch gekennzeichnet, dass** ein Schwellwert für die Schaltdifferenzspannung des Komparators (19, 37, 38, 39) vorgesehen ist.

13. Anordnung nach einem der vorangehenden Ansprüche, **dadurch gekennzeichnet, dass** am Komparator (19, 37, 38, 39) eine Vorspannung angelegt ist.

14. Anordnung nach einem der vorangehenden Ansprüche, **dadurch gekennzeichnet, dass** ein Schaltmittel (64) zum Vertauschen der an den Komparator (39) angeschlossenen Empfängerelektroden (11a-11d) und ein zuschaltbares Signalinvertierungsmittel (63) am Ausgang des Komparators (39) vorgesehen sind, wobei bei einem von einem vorgegebenen Sollsignal abweichenden Ausgangssignal des Komparators (39) unmittelbar vor dem Spannungspuls die angeschlossenen Empfängerelektroden (11a-11d) vertauschbar und das Ausgangssignal des Komparators (39) invertierbar ist.

15. Anordnung nach einem der vorangehenden Ansprüche, **dadurch gekennzeichnet, dass** der Komparator (19, 37, 38, 39) für einen vorbestimmten Zeitraum zeitnah mit dem Beginn eines Spannungspulses (27) anschaltbar ist, wobei dieser Zeitraum die Dauer des Spannungspulses (27) umfasst.

16. Anordnung nach einem der vorangehenden Ansprüche, **dadurch gekennzeichnet, dass** vier Empfängerelektroden (11a-11d, 16a-16d) vorgesehen sind, wobei an jeweils zwei einander zugeordneten Empfängerelektroden (11a, 11c; 11b, 11d; 16a, 16c; 16b, 16d) die Empfängersignale (31, 32, 33, 34) abgreifbar und den Eingängen jeweils eines Komparators (37, 38) zuführbar sind.

17. Anordnung nach Anspruch 16, **dadurch gekennzeichnet, dass** die zwei Komparatoren (37, 38) als Doppelkomparator ausgeführt sind.

18. Anordnung nach einem der vorangehenden Ansprüche, **dadurch gekennzeichnet, dass** vier Empfängerelektroden (11a-11d, 16a-16d) vorgesehen sind, wobei an jeweils zwei einander zugeordneten Empfängerelektroden (11a, 11c; 11b, 11d; 16a, 16c; 16b, 16d) die Empfängersignale (31, 32, 33, 34) abgreifbar und den Eingängen des einen Komparators (39) anhand eines Analogmultiplexers (40) für jedes Empfängerelektrodenpaar (11a, 11c; 11b, 11d; 16a, 16c; 16b, 16d) separat zuführbar sind.

19. Anordnung nach Anspruch 2 oder 3 und einem der Ansprüche 4 bis 18, **dadurch gekennzeichnet, dass** vier Empfängerelektroden (11a-11d, 16a-16d) vorgesehen sind, von denen sich jeweils zwei gegenüberliegende Empfängerelektroden (11a, 11c; 11b, 11d; 16a, 16c; 16b, 16d), die bei einer Messung ein erstes und ein zweites Empfängersignal erzeugen, zugeordnet sind, dass das Vergleichsmittel, durch welches das Vorzeichen der Differenz des ersten Empfängersignals und des zweiten Empfängersignals bestimmbar ist, bei Gleichheit der Empfängersignale einander zugeordneter Empfängerelektroden (11a, 11c; 11b, 11d; 16a, 16c; 16b, 16d) zur Erzeugung eines vordefinierten Signals ausgebildet ist, dass ein Austauschmittel vorgesehen ist, so dass durch das Vergleichsmittel auch die Differenz des zweiten Empfängersignals und des ersten Empfängersignals bestimmbar ist, und dass das Auswertemittel durch Vergleich der vier von dem Vergleichsmittel erhaltenen Signale zum Feststellen des gegebenenfalls fehlenden Drehelements (1, 12) ausgebildet ist.

20. Volumenmessgerät zum Messen des Volumens eines durch dieses strömenden Mediums, insbesondere Wasserzähler, mit einem vom Medium in Rotation versetzbaren Drehteil, insbesondere einem Flügelrad (43), sowie einer Anordnung nach einem der Ansprüche 1 bis 19, wobei das Drehelement mit dem Drehteil, insbesondere dem Flügelrad (43), bewegungsgekoppelt ist.

21. Volumenmessgerät nach Anspruch 20, **dadurch gekennzeichnet, dass** ein mechanisches Zählwerk (47), welches über ein Zählwerkgetriebe mit dem Drehteil, insbesondere dem Flügelrad (43), bewegungsgekoppelt ist, vorgesehen ist, wobei das Drehelement mit dem Zählwerk (47) oder dem Zählwerkgetriebe bewegungsgekoppelt ist.

22. Volumenmessgerät nach Anspruch 21, **dadurch gekennzeichnet, dass** das Drehelement über ein eigenes Untersetzungsgetriebe mit dem Zählwerkgetriebe bewegungsgekoppelt ist.

23. Volumenmessgerät nach Anspruch 21, **dadurch gekennzeichnet, dass** das Drehelement eine Rolle (49) des als Rollenzählwerk (47) ausgebildeten Zählwerks ist, wobei die elektrisch leitende Teilfläche (50) an einer Seitenfläche (48) der Rolle (49) vorgesehen ist.

24. Volumenmessgerät nach Anspruch 21 oder 22, **dadurch gekennzeichnet, dass** das Drehelement ein Zeiger (56a) des Zählwerks ist, an dessen Oberseite die elektrisch leitende Teilfläche (61) vorgesehen ist, und über dem sich eine Zählwerksabdeckung (58) befindet, wobei das Sensorelement (59) und das Detektionsmittel an der gegenüberliegenden Seite der Zählwerksabdeckung (58) vorgesehen sind.

25. Volumenmessgerät nach Anspruch 19 bis 24, **dadurch gekennzeichnet, dass** das Sensorelement (59) und das Detektionsmittel in einer lösbar anbringbaren Einheit (57) integriert sind.

**26.** Volumenmessgerätesystem, umfassend ein Volumenmessgerät zum Messen des Volumens eines durch dieses strömenden Mediums, insbesondere Wasserzähler, mit einem vom Medium in Rotation versetzbaren Drehteil, insbesondere einem Flügelrad, sowie einem mechanischen Zählwerk mit wenigstens einem Drehelement, insbesondere in Form eines Zeigers (56a), der mit dem Drehteil bewegungsgekoppelt ist und an dessen Oberseite eine elektrisch leitende Teilfläche (61) vorgesehen ist, und der über eine Zählwerksabdeckung (58) oder eine Außenwand nach außen hin gekapselt ist, sowie einer am Volumenmessgerät außenseitig lösbar, gegebenenfalls nachrüstbar anbringbarer Einheit (57) mit einem Sensorelement (59) und einen Detektionsmittel, wobei das Drehelement, insbesondere in Form des Zeigers (56a), das Sensorelement (59) und das Detektionsmittel eine Anordnung nach einem der Ansprüche 1 bis 19 bilden.

**27.** Verfahren zum Detektieren einer Drehung eines Drehelements mit einer auf einer im Wesentlichen planen Fläche desselben vorgesehenen elektrisch leitenden Teilfläche, welche eine ihr beabstandet gegenüber stehende ebenflächige Anregungselektrode mit wenigstens zwei ebenflächigen, der Anregungselektrode benachbarten Empfängerelektroden kapazitiv koppelt,
wobei wiederholt

- auf die Anregungselektrode ein Spannungspuls gegeben wird, dessen Spannung höher ist als die Spannung einer die Betriebsspannung der Anordnung zur Verfügung stehenden Batterie,
- Empfängersignale wenigstens eines Paares zweier einander zugeordneter Empfängerelektroden abgegriffen werden und in einem Vergleichsmittel verglichen werden,
- aus dem Ergebnis des Vergleichs ein die Position der Teilfläche bezüglich der Empfängerelektroden anzeigendes Signal bestimmt wird und
- aus zeitlich aufeinander folgenden Signalen die Drehung des Drehelements bestimmt wird,

wobei als Vergleichsmittel ein Komparator verwendet wird.

**28.** Verfahren nach Anspruch 27, **dadurch gekennzeichnet, dass** vier Empfängerelektroden, von denen sich jeweils zwei als Paar zugeordnet sind, vorgesehen sind, wobei nach einem Spannungspuls die Empfängersignale beider Empfängerelektrodenpaare verglichen werden und aus zeitlich aufeinander folgenden Signalen zusätzlich die Drehrichtung bestimmt wird.

**29.** Verfahren nach Anspruch 27 oder 28, **dadurch gekennzeichnet, dass** die Erzeugung des Spannungspulses folgende Teilschritte umfasst:

- Schließen eines Schalters, so dass sich ein Strom durch eine Induktivität aufbaut, die bei geöffnetem Schalter mit den zwischen der Anregungselektrode und den Empfängerelektroden gebildeten Kapazitäten einen Schwingkreis bildet,
- Öffnen des Schalters zur Unterbrechung des Stromes nach einer vorbestimmten Zeitspanne.

**30.** Verfahren nach Anspruch 29, **dadurch gekennzeichnet, dass** zeitnah mit dem Öffnen des Schalters ein weiterer Schalter geschlossen wird, der ein den Vergleich durchführendes Vergleichsmittel für eine weitere vorbestimmte Zeitdauer mit dem zu seinem Betrieb nötigen Strom versorgt.

**Claims**

**1.** Arrangement for detecting a rotation of a rotary element (1, 12) comprising:

- an electrically-conductive surface region (2, 13, 50, 61) provided on a substantially planar surface of the rotary element (1, 12)
- a fixed sensor element (6, 9, 59)
with a planar excitation electrodes (4, 5, 15) and with at least two planar receiver electrodes (8a, 8b, 11a-11d, 16a-16d) adjacent to the excitation electrode (4, 5, 15),
which electrodes are disposed at a spacing distance opposite to the electrically-conductive surface region (2, 13, 50, 61) and which, upon rotation of the rotary element (1, 12), can be coupled to the excitation electrode via the electrically-conductive surface region (2, 13, 50, 61) and
- detection means, comprising a voltage means for charging the excitation electrode (4, 5, 15) with a voltage pulse (27), of which the voltage (u) is greater than the voltage (V∞) of a battery supplying the operating voltage of the arrangement, and evaluation means for picking up receiver signals (31, 32, 33, 34) generated through capacitive coupling on the basis of the voltage pulse (27) from at least two receiver electrodes (8a, 8b, 11a-11d, 16a-16d), comprising comparison means for generating a signal (35) based upon the receiver signals (31, 32, 33, 34) indicating the position of the surface region (2, 13, 50, 61) with reference to the receiver electrodes (8a, 8b, 11a-11d, 16a-16d), wherein the comparison means comprises at least one comparator (19, 37, 38, 39) for demonstrating the polarity sign of the difference of the receiver signals (31, 32, 33, 34).

2. Arrangement according to claim 1,
   **characterised in that**,
   in the absence of a coupling through the surface region (2, 13, 50, 61), a receiver signal (31, 32) substantially identical both in characteristic and also in amplitude can be generated through a voltage pulse (27) of the excitation electrode (4, 5, 15) respectively in two mutually-associated receiver electrodes (8a, 8b, 11a, 11c; 11b, 11d; 16a, 16c; 16b, 16d).

3. Arrangement according to claim 1 or 2,
   **characterised in that**
   the excitation electrode (4, 5, 15) is disposed perpendicular to the axis of rotation of the rotary element (1, 12) and is point symmetrical to the axis of rotation, and two mutually-associated receiver electrodes ((8a, 8b, 11a, 11c; 11b, 11d; 16a, 16c; 16b, 16d) are disposed opposite to one another in a symmetrical manner with reference to the axis of rotation.

4. Arrangement according to any one of the preceding claims,
   **characterised in that**
   the direction of rotation can also be determined from the receiver signals (31, 32, 33, 34) from four receiver electrodes (11a-11d, 16a-16d), of which respectively two (11a, 11c; 11b, 11d; 16a, 16c; 16b, 16d) are associated with one another for the comparison.

5. Arrangement according to any one of the preceding claims,
   **characterised in that**
   the symmetrical excitation electrode (4, 5, 15) is formed as a round or square central electrode (4, 5) and is surrounded in a symmetrical manner by two or four annular-segment electrodes (8a, 8b, 11a-11d) or angular-segment electrodes forming the receiver electrodes (8a, 8b, 11a-11d, 16a-16d).

6. Arrangement according to any one of claims 1 to 3,
   **characterised in that**
   the symmetrical excitation electrode (4, 5, 15) is formed as a round or square outer electrode (15) and two or four annular-segment electrodes (16a-16d) or angular-segment electrodes forming the receiver electrodes (8a, 8b, 11a-11d, 16a-16d) are disposed within the excitation electrode (15).

7. Arrangement according to any one of the preceding claims,
   **characterised in that**
   a further surface region (3, 14) adjoining the surface region (2, 13, 50, 61) is provided, which at least partially covers the excitation electrode (4, 5, 15).

8. Arrangement according to any one of the preceding claims,
   **characterised in that**
   the voltage means comprises an inductor (17).

9. Arrangement according to claim 8,
   **characterised in that**
   the inductor (17) and the capacitances formed from the excitation electrode (4, 5, 15) and receiver electrodes (8a, 8b, 11a-11d, 16a-16d) form an oscillation circuit, into which electrical energy can be introduced via a switch, especially a transistor (18).

10. Arrangement according to claim 9,
    **characterised in that**
    a diode (23) removing the post-pulse oscillation of the oscillation circuit is provided in the switch (18).

11. Arrangement according to any one of the preceding claims,
    **characterised in that**
    the level of the voltage pulse (27) is 30 to 300 V, by preference 100 to 200 V, in particular 140 to 160 V, with an operating voltage of 0.3 to 6 V.

12. Arrangement according to any one of the preceding claims,
    **characterised in that**
    a threshold value is provided for the differential switching voltage of the comparator (19, 37, 38, 39).

13. Arrangement according to any one of the preceding claims,
    **characterised in that**
    a bias voltage is connected to the comparator (19, 37, 38, 39).

14. Arrangement according to any one of the preceding claims,
    **characterised in that**
    a switching means (64) for exchanging the receiver electrodes (11a-11d) connected to the comparator (39) and a connectable signal-inversion means (63) at the output of the comparator (39) are provided, wherein, in the case of an output signal of the comparator (39) deviating from a predetermined set signal, the connected receiver electrodes (11a-11d) can be exchanged directly before the voltage pulse, and the output signal of the comparator (39) can be inverted.

15. Arrangement according to any one of the preceding claims,
    **characterised in that**
    the comparator (19, 37, 38, 39) can be connected for a predetermined period close in time to the start of a voltage pulse (27), wherein this period encompasses the duration of the voltage pulse (27).

**16.** Arrangement according to any one of the preceding claims,
**characterised in that**
four receiver electrodes (11a-11d, 16a-16d) are provided, wherein the receiver signals (31, 32, 33, 34) can be picked up at respectively two mutually-associated receiver electrodes (11a, 11c; 11b, 11d; 16a, 16c; 16b, 16d) and supplied respectively to the inputs of one comparator (37, 38).

**17.** Arrangement according to claim 16,
**characterised in that**
the two comparators (37, 38) are designed as a double comparator.

**18.** Arrangement according to any one of the preceding claims,
**characterised in that**
four receiver electrodes (11a -11d, 16a-16d) are provided, wherein the receiver signals (31, 32, 33, 34) can be picked up at respectively two mutually-associated receiver electrodes (11a, 11c; 11b, 11d; 16a, 16c; 16b, 16d) and supplied separately for each receiver-electrode pair (11a, 11c; 11b, 11d; 16a, 16c; 16b, 16d) to the inputs of the one comparator (39) on the basis of an analog multiplexer (40).

**19.** Arrangement according to claim 2 or 3 and any one of claims 4 to 18,
**characterised in that**
four receiver electrodes (11a-11d, 16a-16d) are provided, of which respectively two opposite receiver electrodes (11a, 11c; 11b, 11d; 16a, 16c; 16b, 16d), which generate a first and second receiver signal in the case of a measurement, are associated with one another, that the comparison means, through which the polarity sign of the difference of the first receiver signal and of the second receiver signal can be determined, is formed in the case of identity of the receiver signals of mutually-associated receiver electrodes (11a, 11c; 11b, 11d; 16a, 16c; 16b, 16d) for the generation of a predefined signal, that an exchange means is provided, so that the difference of the second receiver signal and of the first receiver signal can also be determined through the comparison means, and that the evaluation means is formed through comparison of the four signals received from the comparison means in order to determine the optional absence of the rotary element (1, 12).

**20.** Volume meter for measuring the volume of a medium flowing through the latter, in particular, a water meter with a rotary component capable of being set in motion by the medium, in particular an impeller (43), and an arrangement according to any one of claims 1 to 19, wherein the rotary element is motionally coupled to the rotary component, in particular, the impeller (43).

**21.** Volume meter according to claim 20,
**characterised in that**
a mechanical counter (47), which is motionally coupled via a counter-transmission to the rotary component, in particular the impeller (43), is provided, wherein the rotary element is motionally coupled to the counter (47) or the counter-transmission.

**22.** Volume meter according to claim 21,
**characterised in that**
the rotary element is motionally coupled via its own step-down gear to the counter-transmission.

**23.** Volume meter according to claim 21,
**characterised in that**
the rotary element is a roller (49) of the meter designed as a roller-type counter (47), wherein the electrically-conductive surface region (50) is provided on a lateral surface (48) of the roller (49).

**24.** Volume meter according to claim 21 or 22,
**characterised in that**
the rotary element is an indicator (56a) of the counter, on the upper side of which the electrically-conductive surface region (61) is provided, and above which a counter cover (58) is disposed, wherein the sensor element (59) and the detection means are provided on the opposite side of the counter cover (58).

**25.** Volume meter according to claim 19 to 24,
**characterised in that**
the sensor element (59) and the detection means are integrated in a detachably-mounted unit (57).

**26.** Volume-meter system, comprising a volume meter for measuring the volume of a medium flowing through the latter, in particular a water meter, with a rotary component capable of being set in motion by the medium, in particular an impeller, and a mechanical counter with at least one rotary element, especially in the form of an indicator (56a), which is motionally coupled to the rotary component, and on the upper side of which an electrically-conductive surface region (61) is provided, and which is encapsulated from the outside via a counter cover (58) or an outer wall, and a unit (57) attachable in a detachable manner to the outside of the volume meter, optionally capable of retrofitting, with a sensor element (59) and a detection means, wherein the rotary element, in particular, in the form of the indicator (56a), the sensor element (59) and the detection means form an arrangement according to any one of claims 1 to 19.

**27.** Method for detecting a rotation of a rotary element with an electrically-conductive surface region provided on a substantially planar surface of the same, which couples a planar excitation electrode disposed opposite to it at a spacing distance in a capacitive manner with at least two planar receiver electrodes adjacent to the excitation electrode, wherein, in a repeated manner:

- a voltage pulse, of which the voltage is higher than the voltage of a battery providing the operating voltage of the arrangement, is supplied to the excitation electrode,
- receiver signals of at least one pair of two mutually-associated receiver electrodes are picked up and compared in a comparison means,
- from the result of the comparison, a signal displaying the position of the surface region with reference to the receiver electrodes is determined and
- the rotation of the rotary element is determined from successive signals,

wherein a comparator is used as the comparison means.

**28.** Method according to claim 27, **characterised in that** four receiver electrodes, of which respectively two are associated with one another as a pair, are provided, wherein after a voltage pulse, the receiver signals of both receiver-electrode pairs are compared, and the direction of rotation is additionally determined from signals following one another in time succession.

**29.** Method according to claim 27 or 28, **characterised in that** the generation of the voltage pulse comprises the following individual stages:

- closing a switch, so that a current builds up through an inductor, which, when the switch is opened, forms an oscillation circuit with the capacitances formed between the excitation electrode and the receiver electrodes,
- opening of the switch in order to interrupt the current after a predetermined time interval.

**30.** Method according to claim 29, **characterised in that**, in close time succession with the opening of the switch, a further switch is closed, which supplies a comparison means implementing the comparison with the current necessary for its operation for a further predetermined time duration.

**Revendications**

**1.** Agencement pour la détection d'une rotation d'un élément rotatif (1, 12), comprenant

- une surface partielle électriquement conductrice (2, 13, 50, 61), prévue sur une surface substantiellement plane d'un élément rotatif (1, 12),
- un élément de capteur fixe (6, 9, 59),
avec une électrode d'excitation à surface plane (4, 5, 15) et avec au moins deux électrodes de réception à surface plane (8a, 8b, 11 a à 11 d, 16a à 16d) et adjacentes à l'électrode d'excitation (4, 5, 15),
lesdites électrodes se trouvant à distance en face de la surface partielle électriquement conductrice (2, 13, 50, 61) et pouvant être couplées de façon capacitive avec l'électrode d'excitation lors d'une rotation de l'élément rotatif (1, 12) par l'intermédiaire de la surface partielle électriquement conductrice (2, 13, 50, 61), et
- des moyens de détection, comprenant un moyen de tension pour la sollicitation de l'électrode d'excitation (4, 5, 15) avec une impulsion de tension (27) dont la tension (u) est supérieure à la tension ($V_{cc}$) d'une batterie fournissant la tension de service de l'agencement,
ainsi que des moyens d'évaluation pour prélever des signaux de réception (31, 32, 33, 34) générés par un couplage capacitif en raison de l'impulsion de tension (27) et provenant d'au moins deux électrodes de réception (8a, 8b, 11 a à 11d, 16a à 16d), comprenant des moyens de comparaison pour générer un signal (35) indiquant sur la base des signaux de réception (31, 32, 33, 34) la position de la surface partielle (2, 13, 50, 61) par rapport aux électrodes de réception (8a, 8b, 11a à 11 d, 16a à 16d), dans lequel le moyen de comparaison comprend au moins un comparateur (19, 37, 38, 39) pour détecter le signe de la différence des signaux de réception (31, 32, 33, 34).

**2.** Agencement selon la revendication 1, **caractérisé en ce qu'**en cas d'absence d'un couplage par l'intermédiaire de la surface partielle (2, 13, 50, 61), il est possible de générer par l'intermédiaire d'une impulsion de tension (27) de l'électrode d'excitation (4, 5, 15) un signal de réception (31, 32) substantiellement identique aussi bien en caractéristique qu'en amplitude dans respectivement deux électrodes de réception (8a, 8b ; 11 a, 11 c ; 11 b, 11 d ; 16a, 16c ; 16b, 16d) mutuellement attribuées.

**3.** Agencement selon la revendication 1 ou 2, **caractérisé en ce que** l'électrode d'excitation (4, 5, 15) est agencée perpendiculairement à l'axe de rotation de l'élément rotatif (1, 12) et présente une symétrie ponctuelle par rapport à l'axe de rotation, tout comme deux électrodes de réception (8a, 8b ; 11a, 11 c ; 11b, 11d ; 16a, 16c ; 16b, 16d) mutuellement attribuées, sont situées l'une en face de l'autre de façon symétrique par rapport à l'axe de rotation.

4. Agencement selon l'une quelconque des revendications précédentes, **caractérisé en ce qu'**il est possible de déterminer également le sens de rotation à partir des signaux de réception (31, 32, 33, 34) provenant de quatre électrodes de réception (11a à 11 d, 16a à 16d, dont respectivement deux (11a, 11c ; 11b, 11d ; 16a, 16c ; 16b, 16d) sont mutuellement attribuées en vue d'une comparaison.

5. Agencement selon l'une quelconque des revendications précédentes, **caractérisé en ce que** l'électrode d'excitation symétrique (4, 5, 15) est réalisée comme une électrode centrale ronde ou carrée (4, 5) et est entourée de façon symétrique par deux ou quatre électrodes en segment annulaire (8a, 8b, 11a à 11d) ou électrodes de segment angulaires constituant les électrodes de réception (8a, 8b, 11a à 11 d, 16a à 16d).

6. Agencement selon l'une quelconque des revendications 1 à 3, **caractérisé en ce que** l'électrode d'excitation symétrique (4, 5, 15) est réalisée comme une électrode extérieure carrée ou ronde (15) et deux ou quatre électrodes en segment annulaire (16a à 16d) ou électrodes de segment angulaires constituant les électrodes de réception (8a, 8b, 11a à 11d, 16a à 16d) sont situées à l'intérieur de l'électrode d'excitation (15).

7. Agencement selon l'une quelconque des revendications précédentes, **caractérisé en ce qu'**une surface partielle supplémentaire (3, 14) consécutive à la surface partielle (2, 13, 50, 61) est prévue qui recouvre l'électrode d'excitation (4, 5, 15) au moins en partie.

8. Agencement selon l'une quelconque des revendications précédentes, **caractérisé en ce que** le moyen de tension comprend une inductance (17).

9. Agencement selon la revendication 8, **caractérisé en ce que** l'inductance (17) et les capacités formées à partir de l'électrode d'excitation (4, 5, 15) et les électrodes de réception (8a, 8b, 11a à 11d, 16a à 16d) forment un circuit oscillant dans lequel de l'énergie électrique peut être introduite par l'intermédiaire d'un commutateur, en particulier d'un transistor (18).

10. Agencement selon la revendication 9, **caractérisé en ce qu'**une diode (23) dérivant la post-oscillation du circuit oscillant est prévue au niveau du commutateur (18).

11. Agencement selon l'une quelconque des revendications précédentes, **caractérisé en ce que** la hauteur de l'impulsion de tension (27) est de 30 à 300 V, de préférence de 100 à 200 V, en particulier de 140 à 160 V, pour une tension de service de 0,3 à 6 V.

12. Agencement selon l'une quelconque des revendications précédentes, **caractérisé en ce qu'**une valeur de seuil est prévue pour la tension de différence de commutation du comparateur (19, 37, 38, 39).

13. Agencement selon l'une quelconque des revendications précédentes, **caractérisé en ce qu'**une tension de polarisation est appliquée au niveau du comparateur (19, 37, 38, 39).

14. Agencement selon l'une quelconque des revendications précédentes, **caractérisé en ce qu'**un moyen de commutation (64) est prévu pour permuter les électrodes de réception (11a à 11d) connectées au comparateur (39) et un moyen d'inversion de signal (63) pouvant être mis en circuit est prévu à la sortie du comparateur (39), dans lequel, en cas de signal de sortie s'écartant d'un signal de consigne prédéfini du comparateur (39), immédiatement avant l'impulsion de tension, les électrodes de réception connectées (11a à 11d) peuvent être permutées et le signal de sortie du comparateur (39) peut être inversé.

15. Agencement selon l'une quelconque des revendications précédentes, **caractérisé en ce que** le comparateur (19, 37, 38, 39) peut être mis sous tension pendant une période de temps prédéterminée proche du début d'une impulsion de tension (27), cette période de temps comprenant la durée de l'impulsion de tension (27).

16. Agencement selon l'une quelconque des revendications précédentes, **caractérisé en ce que** quatre électrodes de réception (11a à 11d, 16a à 16d) sont prévues, dans lequel sur respectivement deux électrodes de réception (11 a, 11 c ; 11 b, 11 d ; 16a, 16c ; 16b, 16d) mutuellement attribuées, les signaux de réception (31, 32, 33, 34) peuvent être prélevés et peuvent être amenés aux entrées d'un comparateur (37, 38) respectivement.

17. Agencement selon la revendication 16, **caractérisé en ce que** les deux comparateurs (37, 38) sont réalisés comme un comparateur double.

18. Agencement selon l'une quelconque des revendications précédentes, **caractérisé en ce que** quatre électrodes de réception (11a à 11d, 16a à 16d) sont prévues, dans lequel au niveau de respectivement deux électrodes de réception (11a, 11 c ; 11b, 11 d ;

16a, 16c ; 16b, 16d) mutuellement attribuées, les signaux de réception (31, 32, 33, 34) peuvent être prélevés et peuvent être amenés séparément aux entrées dudit un comparateur (39) à l'aide d'un multiplexeur analogique (40) pour chaque paire d'électrodes de réception (11 a, 11 c ; 11 b, 11 d ; 16a, 16c ; 16b, 16d).

19. Agencement selon la revendication 2 ou 3 et l'une quelconque des revendications 4 à 18, **caractérisé en ce que** quatre électrodes de réception (11a à 11 d, 16a à 16d) sont prévues dont respectivement deux électrodes de réception (11a, 11c; 11b, 11d ; 16a, 16c ; 16b, 16d) opposées, qui génèrent un premier et un deuxième signal de réception lors d'une mesure, sont mutuellement attribuées, **en ce que** le moyen de comparaison qui permet de déterminer le signe de la différence du premier signal de réception et du deuxième signal de réception, en cas d'égalité des signaux de réception provenant d'électrodes de réception (11a, 11c ; 11b, 11d ; 16a, 16c ; 16b, 16d) mutuellement attribuées, est réalisé pour générer un signal prédéfini, **en ce qu'**un moyen de permutation est prévu de sorte que le moyen de comparaison permet également de déterminer la différence du deuxième signal de réception et du premier signal de réception, et **en ce que** le moyen d'évaluation est réalisé par la comparaison des quatre signaux obtenus du moyen de comparaison pour constater l'absence éventuelle de l'élément rotatif (1, 12).

20. Compteur volumétrique pour mesurer le volume d'un milieu passant à travers celui-ci, en particulier compteur d'eau, avec une pièce rotative pouvant être mise en rotation par le milieu, en particulier un rotor (43), ainsi qu'avec un agencement selon l'une quelconque des revendications 1 à 19, dans lequel l'élément rotatif est couplé en mouvement avec la pièce rotative, en particulier le rotor (43).

21. Compteur volumétrique selon la revendication 20, **caractérisé en ce qu'**il est prévu un totalisateur mécanique (47), qui est couplé en mouvement avec la pièce rotative, en particulier le rotor (43), par l'intermédiaire d'un engrenage de totalisateur, dans lequel l'élément rotatif est couplé en mouvement avec le totalisateur (47) ou l'engrenage de totalisateur.

22. Compteur volumétrique selon la revendication 21, **caractérisé en ce que** l'élément rotatif est couplé en mouvement avec l'engrenage de totalisateur par l'intermédiaire de son propre démultiplicateur.

23. Compteur volumétrique selon la revendication 21, **caractérisé en ce que** l'élément rotatif est un rouleau (49) du totalisateur réalisé comme le totalisateur à rouleaux (47), la surface partielle (50) électriquement conductrice étant prévue sur une surface latérale (48) du rouleau (49).

24. Compteur volumétrique selon la revendication 21 ou 22, **caractérisé en ce que** l'élément rotatif est une aiguille (56a) du totalisateur, sur la face supérieure de laquelle est prévue la surface partielle (61) électriquement conductrice, et au-dessus de laquelle se trouve un capot de totalisateur (58), dans lequel l'élément de capteur (59) et le moyen de détection sont prévus sur le côté opposé du capot de totalisateur (58).

25. Compteur volumétrique selon les revendications 19 à 24, **caractérisé en ce que** l'élément de capteur (59) et le moyen de détection sont intégrés dans une unité (57) pouvant être montée de façon amovible.

26. Système de compteur volumétrique, comprenant un compteur volumétrique pour mesurer le volume d'un milieu passant à travers celui-ci, en particulier un compteur d'eau, avec une pièce rotative pouvant être mise en rotation par le milieu, en particulier un rotor, ainsi qu'avec un totalisateur mécanique avec au moins un élément rotatif, en particulier sous la forme d'une aiguille (56a) qui est couplée en mouvement avec la pièce rotative et sur la face supérieure de laquelle une surface partielle (61) électriquement conductrice est prévue, et qui est protégée de l'extérieur par l'intermédiaire d'un capot de totalisateur (58) ou d'une paroi extérieure, ainsi qu'avec une unité (57) pouvant être montée de façon amovible en externe sur le compteur volumétrique, éventuellement par une installation ultérieure, l'unité comprenant un élément de capteur (59) et un moyen de détection dans lequel l'élément rotatif, en particulier sous la forme de l'aiguille (56a), l'élément de capteur (59) et le moyen de détection forment un agencement selon l'une quelconque des revendications 1 à 19.

27. Procédé de détection d'une rotation d'un élément rotatif avec une surface partielle électriquement conductrice prévue sur une surface substantiellement plane de celui-ci, la surface électriquement conductrice couplant de façon capacitive une électrode d'excitation à surface plane située à distance en face de celle-ci avec des électrodes de réception adjacentes à l'électrode d'excitation, dans lequel de façon répétée

- une impulsion de tension est délivrée à l'électrode d'excitation et dont la tension est supérieure à la tension d'une batterie fournissant la tension de service de l'agencement,
- des signaux de réception d'au moins une paire de deux électrodes de réception mutuellement attribuées peuvent être prélevés et comparés dans un moyen de comparaison,

- à partir du résultat de la comparaison, un signal indiquant la position de la surface partielle par rapport aux électrodes de réception est déterminé, et
- à partir de signaux consécutifs dans le temps, la rotation de l'élément rotatif est déterminée,

un comparateur étant utilisé comme moyen de comparaison.

**28.** Procédé selon la revendication 27, **caractérisé en ce que** quatre électrodes de réception, dont respectivement deux sont mutuellement attribuées comme une paire, sont prévues, dans lequel après une impulsion de tension, les signaux de réception des deux paires d'électrodes de réception sont comparés et le sens de rotation est déterminé en plus à partir de signaux consécutifs dans le temps.

**29.** Procédé selon la revendication 27 ou 28, **caractérisé en ce que** la génération de l'impulsion de tension comprend les étapes partielles suivantes :

- fermer un commutateur de sorte qu'un courant est établi par une inductivité, qui, lorsque le commutateur est ouvert, forme un circuit oscillant avec les capacités formées entre l'électrode d'excitation et les électrodes de réception,
- ouvrir le commutateur pour couper le courant après une période de temps prédéterminée.

**30.** Procédé selon la revendication 29, **caractérisé en ce que** dans un délai proche de l'ouverture du commutateur, un commutateur supplémentaire est fermé qui alimente un moyen de comparaison réalisant la comparaison pendant une autre période de temps prédéterminée avec le courant nécessaire à son fonctionnement.

FIG. 1

FIG. 2

FIG. 3

FIG. 4

FIG. 5

**FIG. 6**

**FIG. 7**

Ansteuerpuls Schalter

1 - 100 μs

24

26

$i_L$

i

25

28

0,05-5μs

29

$U_c$

U

27

3V

30

**FIG. 8**

U

1,5 V

31

U

1,5 V

32

**FIG. 9**

FIG. 10

FIG. 11

FIG. 12

FIG. 13

FIG. 14

25

FIG. 15

FIG. 16

54

55

57

56a

56

56

FIG. 17

59

57

60

58

56a    61    56    56

FIG. 18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1033578 B1